(19) Europäisches Patentamt
European Patent Office
Office européen des brevets

(11) **EP 4 788 041 A1**

(12) **EUROPEAN PATENT APPLICATION**
published in accordance with Art. 153(4) EPC

(43) Date of publication:
**05.08.2026 Bulletin 2026/32**

(21) Application number: **23954405.9**

(22) Date of filing: **29.09.2023**

(51) International Patent Classification (IPC):
**H04W 74/0833** (2024.01)   **H04W 72/232** (2023.01)

(52) Cooperative Patent Classification (CPC):
**H04W 72/232; H04W 74/0833**

(86) International application number:
**PCT/JP2023/035796**

(87) International publication number:
**WO 2025/069439 (03.04.2025 Gazette 2025/14)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(71) Applicant: **NTT DOCOMO, INC.**
**Tokyo 100-6150 (JP)**

(72) Inventors:
• **MATSUMURA, Yuki**
**Tokyo 100-6150 (JP)**

• **OKUMURA, Mamoru**
**Tokyo 100-6150 (JP)**
• **NAGATA, Satoshi**
**Tokyo 100-6150 (JP)**
• **WANG, Jing**
**Beijing 100190 (CN)**
• **CHEN, Lan**
**Beijing 100190 (CN)**

(74) Representative: **Hoffmann Eitle**
**Patent- und Rechtsanwälte PartmbB**
**Arabellastraße 30**
**81925 München (DE)**

(54) **TERMINAL, WIRELESS COMMUNICATION METHOD, AND BASE STATION**

(57)     A terminal according to one aspect of the present disclosure includes a transmitting section that performs random access channel (PRACH) transmission triggered by a downlink control channel (PDCCH) order, and a control section that controls timing of the PRACH transmission by taking account of at least one of a first parameter for synchronization signal block (SSB)-based time and frequency tracking and a second parameter for radio frequency (RF) and base band (BB) preparation, for a time gap between PDCCH order reception and the PRACH transmission.

8.1   Random access preamble

[...]

If a random access procedure is initiated by a PDCCH order, the UE, if requested by higher layers, transmits a PRACH in the selected PRACH occasion, as described in [11, TS 38.321], for which a time between the last symbol of the PDCCH order reception and the first symbol of the PRACH transmission is larger than or equal to $N_{T,2} + \Delta_{BWPSwitching} + \Delta_{Delay} + T_{switch} + T_{SSB} + \Delta_{RF/BB\_preparation}$ msec, where

- $N_{T,2}$ is a time duration of $N_2$ symbols corresponding to a PUSCH preparation time for UE processing capability 1 [6, TS 38.214] assuming $\mu$ corresponds to the smallest SCS configuration between the SCS configuration of the PDCCH order and the SCS configuration of the corresponding PRACH transmission

- $\Delta_{BWPSwitching} = 0$ if the active UL BWP does not change or if cell indicator field in PDCCH order indicates a non-serving cell, and $\Delta_{BWPSwitching}$ is defined in [10, TS 38.133] otherwise

- $\Delta_{Delay} = 0.5$ msec for FR1 and $\Delta_{Delay} = 0.25$ msec for FR2

- $T_{switch}$ is a switching gap duration as defined in [6, TS 38.214]

- $T_{SSB}$ is for SSB based time and frequency tracking, if cell indicator field in PDCCH order indicates a non-serving cell.

  - $T_{SSB} = 0$, if TCI state of indicated non-serving cell has been activated before PDCCH ordered RACH, and if SSB index indicated in PDCCH order is in the active TCI state list, and measurement period of L1-RSRP is no longer than 160ms.
  - $T_{SSB} = X$ (FFS, X=0 is also possible), if SSB index indicated in PDCCH order is not in the active TCI state list that has been activated for the indicated non-serving cell, when the measurement period of L1-RSRP is no longer than 160ms.
  - $T_{SSB} = Y$ (FFS, non-zero. May refer to TS38.133), otherwise.

- $\Delta_{RF/BB\_preparation}$ is for RF and/or BB preparation and retuning, if cell indicator field in PDCCH order indicates a non-serving cell.

  - $\Delta_{RF/BB\_preparation} = A$ (FFS, A=0 is also possible), if PRACH bandwidth of indicated non-serving cell is within active UL BWP.
  - $\Delta_{RF/BB\_preparation}$ is DCI based BWP switching delay specified in clause 8.6 of TS 38.133 (in TS 38.133, DCI based BWP switch delay value is dependent on UE capability), if PRACH bandwidth of indicated non-serving cell is outside active UL BWP but within one of configured UL BWPs of any active serving cell.
  - $\Delta_{RF/BB\_preparation} = B$ (FFS, non-zero. May refer to TS38.133), if PRACH bandwidth of indicated non-serving cell is not within any of the configured UL BWPs of any active serving cell.

For a PRACH transmission using 1.25 kHz or 5 kHz SCS, the UE determines $N_2$ assuming SCS configuration $\mu = 0$.

FIG.8

**Description**

Technical Field

The present disclosure relates to a terminal, a radio communication method, and a base station in next-generation mobile communication systems.

Background Art

In a Universal Mobile Telecommunications System (UMTS) network, the specifications of Long-Term Evolution (LTE) have been drafted for the purpose of further increasing high speed data rates, providing lower latency and so on (Non-Patent Literature 1). In addition, for the purpose of further high capacity, advancement and the like of the LTE (Third Generation Partnership Project (3GPP (registered trademark)) Release (Rel.) 8 and Rel. 9), the specifications of LTE-Advanced (3GPP Rel. 10 to Rel. 14) have been drafted.

Successor systems of LTE (for example, also referred to as "5th generation mobile communication system (5G)," "5G+ (plus)," "6th generation mobile communication system (6G)," "New Radio (NR)," "3GPP Rel. 15 (or later versions)," and so on) are also under study.

Citation List

Non-Patent Literature

Non-Patent Literature 1: 3GPP TS 36.300 V8.12.0 "Evolved Universal Terrestrial Radio Access (E-UTRA) and Evolved Universal Terrestrial Radio Access Network (E-UTRAN); Overall description; Stage 2 (Release 8)," April, 2010

Summary of Invention

Technical Problem

It is assumed that, in future radio communication systems (for example, radio communication systems of Rel. 17/5G or later), communication is controlled based on inter-cell mobility with a plurality of cells including a non-serving cell or inter-cell mobility using a plurality of transmission/reception points (for example, multi-TRP (MTRP)). It is also assumed that, in inter-cell mobility, a candidate cell is configured separately from a serving cell, and switching/switch between the serving cell and the candidate cell is performed.

Incidentally, for a random access procedure related to cell switching, a time gap between a PDCCH order and PRACH transmission corresponding to the PDCCH order is under study. For example, application of a longer time gap in a specific scenario with mobility is under study.

Unless definitions of these for the mobility are definite, an appropriate random access procedure fails, which may result in reduction in communication throughput.

The present disclosure has been made in view of this respect, and an object of the present disclosure is to provide a terminal, a radio communication method, and a base station that enable appropriate communication.

Solution to Problem

A terminal according to one aspect of the present disclosure includes a transmitting section that performs random access channel (PRACH) transmission triggered by a downlink control channel (PDCCH) order, and a control section that controls timing of the PRACH transmission by taking account of at least one of a first parameter for synchronization signal block (SSB)-based time and frequency tracking and a second parameter for radio frequency (RF) and base band (BB) preparation, for a time gap between PDCCH order reception and the PRACH transmission.

Advantageous Effects of Invention

According to one aspect of the present disclosure, it is possible to appropriately perform communication.

Brief Description of Drawings

[FIG. 1] FIG. 1A to FIG. 1D are diagrams to show examples of multi-TRP.

[FIG. 2] FIG. 2A and FIG. 2B are diagrams to show examples of inter-cell mobility.

[FIG. 3] FIG. 3A and FIG. 3B are diagrams to show examples of switching between a serving cell and an additional cell by L1/L2 signaling.

[FIG. 4] FIG. 4 is a diagram to show an example of configuration examples 1 to 3 when candidate cells are supported.

[FIG. 5] FIG. 5A to FIG. 5C are diagrams to show examples of a case where switching between candidate cells/a candidate cell group by L1/L2 signaling is performed in configuration examples 1 to 3 when candidate cells are supported.

[FIG. 6] FIG. 6 is a diagram to show an example of timing advance groups (TAGs) to which cells included in a cell group belong.

[FIG. 7] FIG. 7 is a diagram to show an example of a MAC CE for timing advance command.

[FIG. 8] FIG. 8 is a diagram to show an example of description of a specification according to a first embodiment.

[FIG. 9] FIG. 9 is a diagram to show an example of a schematic structure of a radio communication system according to one embodiment.

[FIG. 10] FIG. 10 is a diagram to show an example of a structure of a base station according to one embodiment.

[FIG. 11] FIG. 11 is a diagram to show an example of a structure of a user terminal according to one embodiment.

[FIG. 12] FIG. 12 is a diagram to show an example of a hardware structure of the base station and the user terminal according to one embodiment.

[FIG. 13] FIG. 13 is a diagram to show an example of a vehicle according to one embodiment.

Description of Embodiments

(TCI, Spatial Relation, QCL)

For NR, control of reception processing (for example, at least one of reception, de-mapping, demodulation, and decoding) and transmission processing (for example, at least one of transmission, mapping, precoding, modulation, and coding) of at least one of a signal and a channel (referred to as a signal/channel) in a UE, based on a transmission configuration indication state (TCI state) has been under study.

The TCI state may be a state applied to a downlink signal/channel. A state that corresponds to the TCI state applied to an uplink signal/channel may be expressed as spatial relation.

The TCI state is information related to quasi-co-location (QCL) of the signal/channel, and may be referred to as a spatial reception parameter, spatial relation information, or the like. The TCI state may be configured for the UE for each channel or for each signal.

QCL is an indicator indicating statistical properties of the signal/channel. For example, when a certain signal/channel and another signal/channel are in a relationship of QCL, it may mean that it is assumable that at least one of Doppler shift, a Doppler spread, an average delay, a delay spread, and a spatial parameter (for example, a spatial reception parameter (spatial Rx parameter)) is the same (the relationship of QCL is satisfied in at least one of these) between the plurality of different signals/channels.

Note that the spatial reception parameter may correspond to a receive beam of the UE (for example, a receive analog beam), and the beam may be identified based on spatial QCL. The QCL (or at least one element in the relationship of QCL) in the present disclosure may be interpreted as sQCL (spatial QCL).

For the QCL, a plurality of types (QCL types) may be defined. For example, four QCL types A to D may be provided, which have different parameter(s) (or parameter set(s)) that can be assumed to be the same, and such parameter(s) (which may be referred to as QCL parameter(s)) are described below:

- QCL type A (QCL-A): Doppler shift, Doppler spread, average delay, and delay spread
- QCL type B (QCL-B): Doppler shift and Doppler spread
- QCL type C (QCL-C): Doppler shift and average delay
- QCL type D (QCL-D): Spatial reception parameter

A case that the UE assumes that a certain control resource set (CORESET), channel, or reference signal is in a relationship of specific QCL (for example, QCL type D) with another CORESET, channel, or reference signal may be referred to as QCL assumption.

The UE may determine at least one of a transmit beam (Tx beam) and a receive beam (Rx beam) of the signal/channel, based on the TCI state or the QCL assumption of the signal/channel.

The TCI state may be, for example, information related to QCL between a channel as a target (in other words, a reference signal (RS) for the channel) and another signal (for example, another RS). The TCI state may be configured (indicated) by higher layer signaling or physical layer signaling, or a combination of these.

Note that a channel/signal being a target of application of a TCI state may be referred to as a target channel/reference signal (RS) or simply as a target, and another signal described above may be referred to as a reference reference signal (reference RS), a source RS, or simply as a reference.

A channel for which the TCI state or spatial relation is configured (specified) may be, for example, at least one of a downlink shared channel (Physical Downlink Shared Channel (PDSCH)), a downlink control channel (Physical Downlink Control Channel (PDCCH)), an uplink shared channel (Physical Uplink Shared Channel (PUSCH)), and an uplink control channel (Physical Uplink Control Channel (PUCCH)).

The RS to have a QCL relationship with the channel may be, for example, at least one of a synchronization signal block (SSB), a channel state information reference signal (CSI-RS), a reference signal for measurement (Sounding Reference Signal (SRS)), a CSI-RS for tracking (also referred to as a Tracking Reference Signal (TRS)), a reference signal for QCL detection (also referred to as a QRS), a reference signal for demodulation (DeModulation Reference Signal (DMRS)), and the like.

The SSB is a signal block including at least one of a primary synchronization signal (PSS), a secondary synchronization signal (SSS), and a broadcast channel (Physical Broadcast Channel (PBCH)). The SSB may be referred to as an SS/PBCH block.

An RS of QCL type X in a TCI state may mean an RS in a relationship of QCL type X with (a DMRS of) a certain channel/signal, and this RS may be referred to as a QCL source of QCL type X in the TCI state.

(Initial Access Procedure)

In an initial access procedure, the UE (RRC_IDLE mode) performs reception of an SS/PBCH block (SSB), transmission of Msg. 1 (PRACH/random access preamble/preamble), reception of Msg. 2 (PDCCH, PDSCH including a random access response (RAR)), transmission of Msg. 3 (PUSCH scheduled by an RAR UL grant), and reception of Msg. 4 (PDCCH, PDSCH including UE contention resolution identity). Subsequently, when an ACK for Msg. 4 is transmitted from the UE by a base station (network), an RRC connection is established (RRC_CONNECTED mode).

The reception of the SSB includes PSS detection, SSS detection, PBCH-DMRS detection, and PBCH reception. The PSS detection performs detection of part of a physical cell ID (PCI), detection (synchronization) of an OFDM symbol timing, and (coarse) frequency synchronization. The SSS detection includes detection of the physical cell ID. The PBCH-DMRS detection includes detection of (part of) an SSB index in a half radio frame (5 ms). The PBCH reception includes detection of a system frame number (SFN) and a radio frame timing (SSB index), reception of configuration information for remaining minimum system information (RMSI, SIB1) reception, and recognition of whether the UE can camp on the cell (carrier).

The SSB includes a band of 20 RBs and a time of 4 symbols. A transmission periodicity of the SSB is configurable from {5, 10, 20, 40, 80, 160} ms. In the half frame, a plurality of symbol locations of the SSB are defined based on a frequency range (FR1, FR2).

The PBCH includes a 56-bit payload. N repetitions of the PBCH are transmitted in a periodicity of 80 ms. N depends on the transmission periodicity of the SSB.

The system information consists of an MIB, RMSI (SIB1), and other system information (OSI) delivered by the PBCH. SIB1 includes a RACH configuration, and information for a RACH procedure. A time/frequency resource relationship between the SSB and a PDCCH monitoring resource for SIB1 is configured by the PBCH.

The base station that uses beam correspondence transmits a plurality of SSBs by using a plurality of respective beams every SSB transmission periodicity. The plurality of SSBs include a plurality of respective SSB indices. The UE that has detected one SSB transmits a PRACH in a RACH occasion associated with the SSB index, and receives an RAR in an RAR window.

(Multi-TRP)

For NR, it is studied that one or a plurality of transmission/reception points (TRPs) (multi-TRP) perform DL transmission to a UE by using one or a plurality of panels (multi-panel). It is also studied that the UE performs UL transmission to one or a plurality of TRPs.

Note that the plurality of TRPs may correspond to the same cell identifier (ID) or may correspond to different cell IDs. The cell ID may be a physical cell ID (for example, a PCI) or a virtual cell ID.

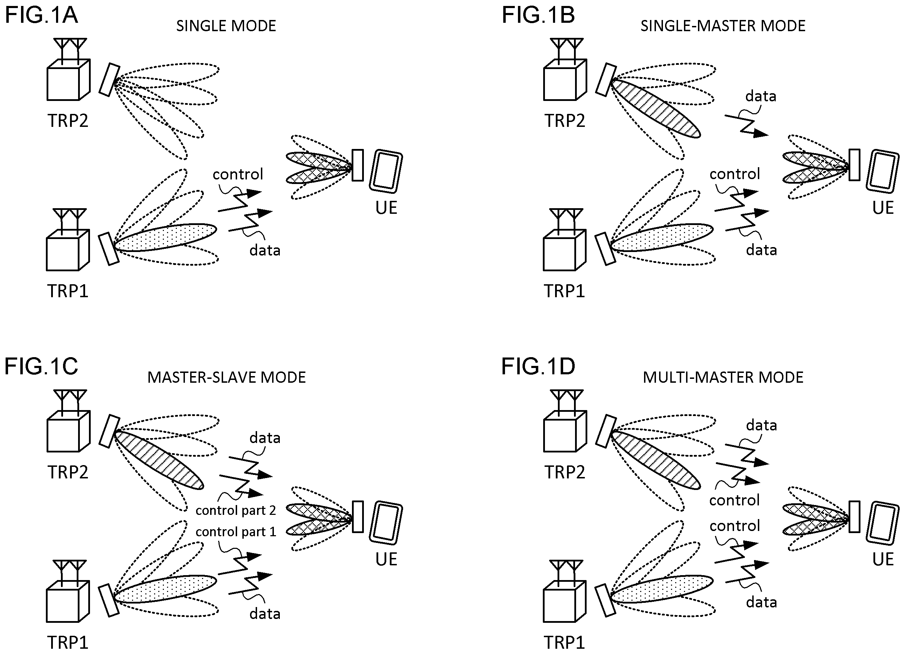

FIG. 1A to FIG. 1D are diagrams to show examples of multi-TRP scenarios. It is assumed that, in these examples, each TRP can transmit four different beams, but these examples are not restrictive.

FIG. 1A shows an example of a case where only one TRP (in the present example, TRP1) of the multi-TRP performs transmission to a UE (which may be referred to as a single mode, a single TRP, or the like). In this case, TRP1 transmits both a control signal (PDCCH) and a data signal (PDSCH) to the UE.

In the present disclosure, a single-TRP mode may mean a mode in a case where no multi-TRP (mode) is configured.

FIG. 1B shows an example of a case where only one TRP (in the present example, TRP1) of the multi-TRP transmits a control signal to a UE and where the multi-TRP transmits data signals (which may be referred to as a single-master mode). The UE receives respective PDSCHs transmitted from the multi-TRP, based on one piece of downlink control information (DCI).

FIG. 1C shows an example of a case where each of the multi-TRP transmits part of a control signal to a UE and where the multi-TRP transmits data signals (which may be referred to as a master-slave mode). TRP1 may transmit part 1 of the control signal (DCI), and TRP2 may transmit part 2 of the control signal (DCI). Part 2 of the control signal may depend on part 1. The UE receives respective PDSCHs transmitted from the multi-TRP, based on these parts of the DCI.

FIG. 1D shows an example of a case where each of the multi-TRP transmits a separate control signal to a UE and where the multi-TRP transmits data signals (which may be referred to as a multi-master mode). TRP1 may transmit a first control signal (DCI), and TRP2 may transmit a second control signal (DCI). The UE receives respective PDSCHs transmitted from the multi-TRP, based on these pieces of DCI.

When a plurality of PDSCHs from multi-TRP (which may be referred to as multi-PDSCH (multiple PDSCHs)) are scheduled by using one piece of DCI as in FIG. 1B, the DCI may be referred to as single DCI (S-DCI, single PDCCH). When a plurality of respective PDSCHs from multi-TRP are scheduled by using a plurality of pieces of DCI as in FIG. 1D, the plurality of pieces of DCI may be referred to as multi-DCI (M-DCI, multi-PDCCH (multiple PDCCHs)).

Each TRP of the multi-TRP may transmit a different transport block (TB)/codeword (Code Word (CW))/different layer. Alternatively, each TRP of the multi-TRP may transmit the same TB/CW/layer.

As one mode of multi-TRP transmission, non-coherent joint transmission (NCJT) is under study. In NCJT, for example, TRP 1 performs modulation mapping on a first codeword, performs layer mapping, and transmits a first PDSCH in layers of a first number (for example, two layers) by using first precoding. TRP 2 performs modulation mapping on a second codeword, performs layer mapping, and transmits a second PDSCH in layers of a second number (for example, two layers) by using second precoding.

Note that a plurality of PDSCHs (multi-PDSCH) transmitted by NCJT may be defined to partially or entirely overlap in terms of at least one of the time and frequency domains. In other words, a first PDSCH from a first TRP and a second PDSCH from a second TRP may have an overlap in terms of at least one of the time and frequency resources.

The first PDSCH and second PDSCH may be assumed not to be in a quasi-co-location (QCL) relationship (not quasi-co-located). Reception of multi-PDSCH may be interpreted as simultaneous reception of PDSCHs of a QCL type other than a certain QCL type (for example, QCL type D).

For URLLC for multi-TRP, it is studied to support PDSCH (transport block (TB) or codeword (CW)) repetition over multi-TRP. It is studied to support a scheme of repetition over multi-TRP in the frequency domain, the layer (space) domain, or the time domain (URLLC schemes, for example, schemes 1, 2a, 2b, 3, and 4). In scheme 1, multi-PDSCH from multi-TRP is space division multiplexed (SDMed). In schemes 2a and 2b, PDSCHs from multi-TRP are frequency division multiplexed (FDMed). In scheme 2a, a redundancy version (RV) is the same for the multi-TRP. In scheme 2b, an RV may be the same or different for the multi-TRP. In schemes 3 and 4, multi-PDSCH from multi-TRP is time division multiplexed (TDMed). In scheme 3, multi-PDSCH from multi-TRP is transmitted in one slot. In scheme 4, multi-PDSCH from multi-TRP is transmitted in different slots.

Such a multi-TRP scenario allows more flexible transmission control using a channel of good quality.

There is a possibility that NCJT using multi-TRP/panel uses a high rank. To support ideal and non-ideal backhaul between a plurality of TRPs, both single DCI (single PDCCH, for example, FIG. 1B) and multi-DCI (multi-PDCCH, for example, FIG. 1D) may be supported. The maximum number of TRPs may be two for both of the single DCI and the multi-DCI.

TCI enhancement is under study for single-PDCCH design (mainly for ideal backhaul). Each TCI codepoint in DCI may correspond to one or two TCI states. A TCI field size may be the same as that of Rel. 15.

For a PDCCH/CORESET defined in Rel. 15, one TCI state without any CORESET pool index (CORESETPoolIndex) (which may be referred to as TRP information (TRP Info)) is configured for one CORESET.

For enhancement of a PDCCH/CORESET defined in Rel. 16, a CORESET pool index is configured for each CORESET in multi-DCI based multi-TRP.

(Inter-Cell Mobility)

For NR, it is studied that one or a plurality of transmission/reception points (TRPs) (multi-TRP (MTRP)) perform DL transmission to a UE. It is also studied that the UE performs UL transmission to one or a plurality of TRPs.

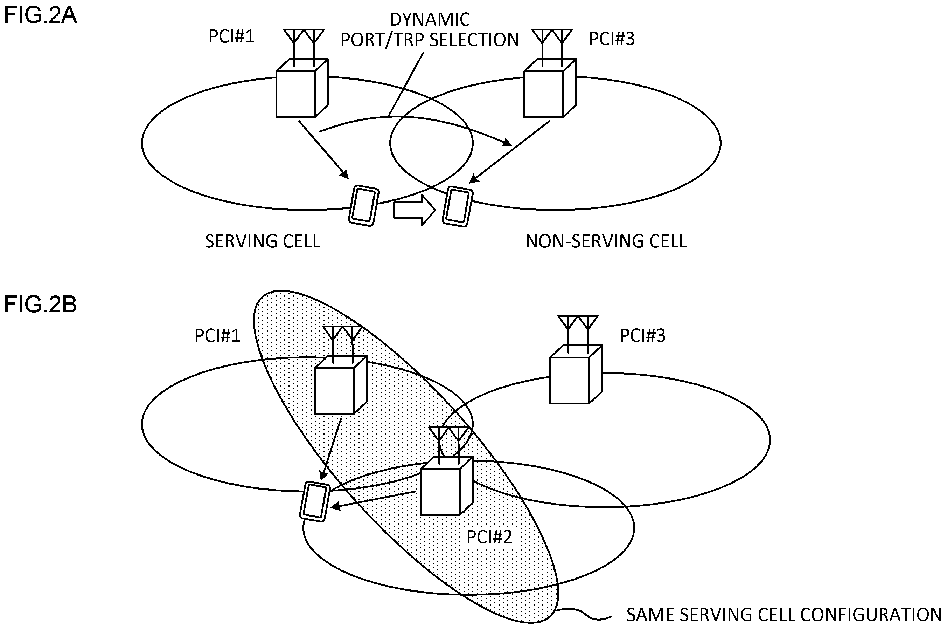

It is considered that the UE receives channels/signals from a plurality of cells/TRPs in inter-cell mobility (for example, L1/L2 inter cell mobility) (see FIGS. 2A and 2B).

FIG. 2A shows an example of inter-cell mobility with cells including a non-serving cell (for example, Single-TRP inter-cell mobility). The UE may be configured with one TRP (or a single TRP) in each cell. Here, shown is a case where the UE receives channels/signals from a base station/TRP of cell #1 being a serving cell, and a base station/TRP of cell #3 being not a serving cell (non-serving cell). For example, this case corresponds to a case where the UE switches from cell #1 to cell #3 (for example, fast cell switch).

In this case, selection of a port (for example, an antenna port)/TRP may be performed dynamically. The selection of a port (for example, an antenna port)/TRP may be performed based on a TCI state indicated or updated by DCI/MAC CE. Here, shown is a case of supporting configuration of different physical cell IDs (for example, PCIs) for cell #1 and cell #3.

FIG. 2B shows an example of a multi-TRP scenario (for example, inter-cell mobility in a case of using multi-TRP (Multi-TRP inter-cell mobility)). The UE may be configured with a plurality of (for example, two) TRPs (or different CORESET pool indices) in each cell. Here, shown is a case where the UE receives channels/signals from TRP #1 and TRP #2. Here, also shown is a case where TRP #1 corresponds to physical cell ID (PCI) #1 and TRP #2 corresponds to PCI #2.

The multi-TRP (TRPs #1 and #2) may be connected via an ideal/non-ideal backhaul to exchange information, data, or the like. Each TRP of the multi-TRP may transmit the same or a different codeword (Code Word (CW)) and the same or a different layer. As one mode of multi-TRP transmission, non-coherent joint transmission (NCJT) may be employed as shown in FIG. 2B. Here, shown is a case where NCJT is performed between TRPs corresponding to different PCIs. Note that the same serving cell configuration may be applied/configured for TRP #1 and TRP #2.

A plurality of PDSCHs (multi-PDSCH) transmitted by NCJT may be defined to partially or entirely overlap in terms of at least one of the time and frequency domains. In other words, a first PDSCH from TRP #1 and a second PDSCH from TRP #2 may have an overlap in terms of at least one of the time and frequency resources. The first PDSCH and the second PDSCH may be used for transmission of the same TB or transmission of different TBs.

The first PDSCH and second PDSCH may be assumed not to be in a quasi-co-location (QCL) relationship (not quasi-co-located). Reception of multi-PDSCH may be interpreted as simultaneous reception of PDSCHs of a QCL type other than a certain QCL type (for example, QCL type D).

The plurality of PDSCHs (which may be referred to as multi-PDSCH (multiple PDSCHs)) from the multi-TRP may be scheduled by using one piece of DCI (single DCI (S-DCI), single PDCCH) (single-master mode). Such one piece of DCI may be transmitted from one TRP of the multi-TRP. A structure using one piece of DCI in multi-TRP may be referred to as single-DCI based multi-TRP (mTRP/MTRP).

The plurality of PDSCHs from the multi-TRP may each be scheduled by using a respective one of a plurality of pieces of DCI (multi-DCI (M-DCI), multi-PDCCH (multiple PDCCHs)) (multi-master mode). The plurality of pieces of DCI may each be transmitted from a respective one of the multi-TRP. A structure using a plurality of pieces of DCI in multi-TRP may be referred to as multi-DCI based multi-TRP (mTRP/MTRP).

For different TRPs, the UE may be assumed to transmit separate CSI reports related to the respective TRPs. Such CSI feedback may be referred to as separate feedback, separate CSI feedback, and the like. In the present disclosure, "separate" may be interpreted as "independent," and vice versa.

In inter-cell mobility, scenario 1 or scenario 2 below is considered. Note that, in the present disclosure, a serving cell may be interpreted as a TRP in the serving cell. Layer 1/layer 2 (L1/L2) and DCI/Medium Access Control Control Element (MAC CE) may be interchangeably interpreted. In the present disclosure, a physical cell ID (Physical Cell Identity (PCI)) different from the PCI of the current serving cell may be simply referred to as a "different PCI". A non-serving cell, a cell having a different PCI, and an additional cell may be interchangeably interpreted.

<Scenario 1>

Scenario 1 corresponds to, for example, inter-cell mobility for multi-TRP. Note that scenario 1 may be a scenario not corresponding to inter-cell mobility for multi-TRP. In scenario 1, for example, the following procedure is performed.

(1) The UE receives, from the serving cell, a configuration of an SSB for beam measurement of a TRP corresponding to a different PCI from the serving cell and a configuration necessary for using radio resources for data transmission and reception, including resources of the different PCI.

(2) The UE performs beam measurement of the TRP corresponding to the different PCI, and reports beam measurement results to the serving cell.

(3) Based on the above report, the transmission configuration indication (TCI) state associated with the TRP corresponding to the different PCI is activated by L1/L2 signaling from the serving cell.

(4) The UE performs transmission and reception by using a UE-dedicated channel on the TRP corresponding to the different PCI.

(5) The UE needs to invariably cover the serving cell, including a case of the multi-TRP. Similarly to a conventional system, the UE needs to use a common channel (a broadcast control channel (BCCH), a paging channel (PCH)) and the like from the serving cell.

In scenario 1, when the UE transmits and receives an additional cell/TRP (a TRP corresponding to a PCI of the additional cell) and a signal, the serving cell (assumption of the serving cell in the UE) is not changed. In other words, L1/L2-based switching of the serving cell is not supported. The UE is configured with a higher layer parameter related to the PCI of the non-serving cell from the serving cell. Scenario 1 may be applied in Rel. 17, for example.

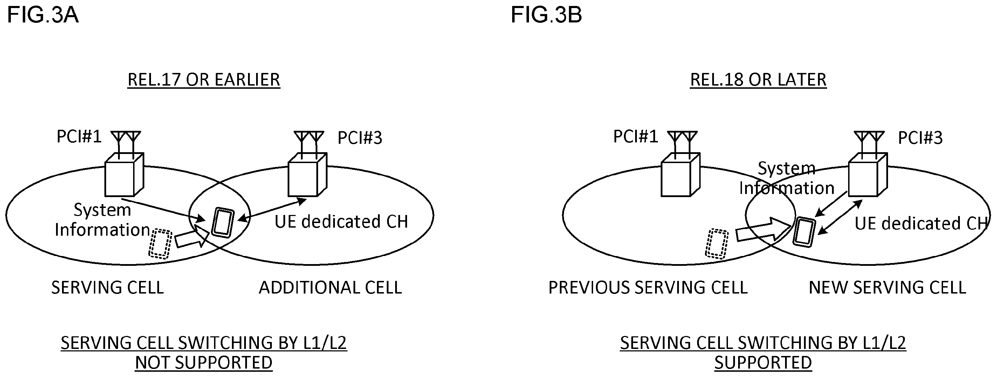

FIG. 3A is a diagram to show an example of movement of the UE in Rel. 17. A case is assumed in which the UE moves from a cell (serving cell) of PCI #1 to a cell (additional cell) (overlapping the serving cell) of PCI #3. In this case, in Rel. 17, switching of the serving cells by L1/L2 is not supported.

The additional cell is a cell having an additional PCI different from the PCI of the serving cell. The UE can receive/transmit a UE-dedicated channel from the additional cell. The UE needs to be present within coverage of the serving cell in order to receive a UE common channel (for example, system information/paging/short message). When the UE moves out of coverage of the serving cell, switching of cells is required through handover (also referred to as L3 mobility) or the like.

<Scenario 2>

In scenario 2, L1/L2 inter-cell mobility is applied. In L1/L2 inter-cell mobility, the serving cell can be changed by using a function such as beam control without performing RRC reconfiguration. In other words, transmission and reception to and from an additional cell can be performed without performing handover (or without performing L3 mobility procedure). For handover, RRC reconnection is required, which generates a period in which data communication cannot be performed, and thus by applying L1/L2 inter-cell mobility that does not require handover, data communication can be continued even at the time of the serving cell change. In scenario 2, for example, the following procedure is performed.

(1) The UE receives, from the serving cell, a configuration of an SSB for a cell (additional cell) having a different PCI for beam measurement/serving cell change.
(2) The UE performs beam measurement of the cell using the different PCI, and reports measurement results to the serving cell.
(3) The UE may receive a configuration (serving cell configuration) of the cell having the different PCI by higher layer signaling (for example, RRC). In other words, a pre-configuration related to serving cell change may be performed. The configuration may be performed together with or may be performed separately from the configuration in (1).
(4) Based on the above report, the TCI state of the cell having the different PCI may be activated by L1/L2 signaling according to the serving cell change. The TCI state activation and the serving cell change may be separately performed.
(5) The UE changes the serving cell (assumption of the serving cell), and starts reception/transmission by using a pre-configured UE-dedicated channel and the TCI state.

In other words, in scenario 2, the serving cell (assumption of the serving cell in the UE) is updated by L1/L2 signaling. Scenario 2 may be applied in Rel. 18 or later.

FIG. 3B is a diagram to show an example of movement of the UE in Rel. 18. In Rel. 18, the serving cell is switched by L1/L2. The UE can receive/transmit a UE-dedicated channel/common channel from/to a new serving cell. The UE may go out of the coverage of the previous serving cell.

(Configuration of Candidate Cells)

In L1/L2 inter-cell mobility, in addition to the serving cell, candidate cells may be configured. In the present disclosure, a candidate cell may be interpreted as a target cell, an additional cell, or an additional PCI. One or more candidate cells (or a candidate cell group) may be separately associated with respective serving cells, or one or more candidate cells (or a candidate cell group) may be associated with a plurality of serving cells in common.

Configuration of candidate cells (or a candidate cell group) may be configured similarly to inter-cell beam management (inter-cell BM) of existing systems (for example, Rel. 17 or earlier versions) by using a certain higher layer parameter (for example, ServingCellConfig). Alternatively, for configuration of candidate cells (or a candidate cell group), a carrier aggregation configuration framework (for example, CA configuration framework) or a CHO (Conditional Handover)/CPC (Conditional PSCell Change) configuration framework may be reused.

For candidate cells (or a candidate cell group) configured by a higher layer parameter, activation/deactivation may be indicated to the UE by a MAC CE/DCI.

As configuration of candidate cells (or association with serving cells), at least one of configuration example 1 to configuration example 3 below may be applied, for example. Here, shown is an example of SpCell #0, SCell #1, and SCell #2 being configured as serving cells and candidate cells/a candidate cell group being configured separately from the serving cells. Configuration example 1 to configuration example 3 below are merely an example, and the number of serving cells/the number of candidate cells/the number of candidate cell groups, association between the serving cells and the candidate cells, and the like are not limited to this and may be changed as appropriate. Alternatively, another configuration example(s) may be supported/applied in addition to/in place of configuration example 1 to configuration example 3.

{Configuration Example 1}

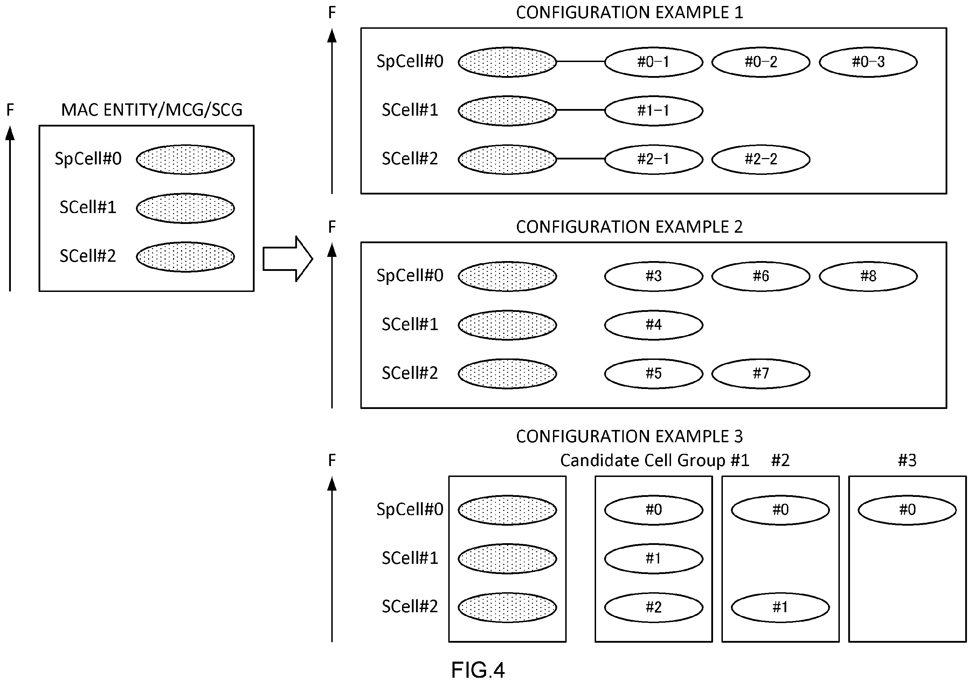

In configuration example 1, one or more candidate cells are each associated with/configured for each serving cell (or a frequency domain corresponding to each serving cell) (see FIG. 4). Here, shown is a case where candidate cells #0-1, #0-2, and #0-3 are associated with SpCell #0 (or a frequency domain corresponding to SpCell #0), candidate cell #1-1 is associated with SCell #1 (or a frequency domain corresponding to SCell #1), and candidate cells #2-1 and #2-2 are associated with SCell #2 (or a frequency domain corresponding to SpCell #2). Information related to the association may be configured/indicated from the base station to the UE by RRC/MAC CE/DCI.

{Configuration Example 2}

In configuration example 2, candidate cells are associated with/configured for a MAC entity/MCG/SCG (see FIG. 4). Here, shown is a case where candidate cells #3 to #8 are associated with a MAC entity/MCG/SCG. In this case, instead of a candidate cell(s) being associated with each serving cell, the candidate cells are configured for the MAC entity or cell group (for example, an MCG/SCG). Information related to the candidate cell(s) configured for each cell may be configured/indicated from the base station to the UE by RRC/MAC CE/DCI.

{Configuration Example 3}

In configuration example 3, one or more candidate cell groups are configured (see FIG. 4). Each candidate cell group includes one or more candidate cells. Here, shown is a case where candidate cell group #1 including candidate cells #0 to #2, candidate cell group #2 including candidate cells #0 and #1, and candidate cell group #3 including candidate cell #0 are configured. At least one of information related to the candidate cell groups to be configured and information related to the candidate cell(s) included in each candidate cell group may be configured/indicated from the base station to the UE by RRC/MAC CE/DCI.

{Serving Cell Switching}

In existing systems (for example, Rel. 17), L1 beam indication related to a TCI state of an additional PCI (or an additional cell) (for example, indication by a TCI state field of DCI) is supported.

It is assumed, in Rel. 18 or later versions, that a new L1/L2 signal (for example, DCI/MAC CE) indicating switching of a serving cell (for example, serving cell switch) is supported. It may be assumed that, as the indication, at least one of implicit indication and explicit indication is supported. The implicit indication may mean that a certain CORESET is updated to a TCI state associated with an additional PCI by a MAC CE, for example. The explicit indication may mean that cell switching is directly indicated by DCI/MAC CE.

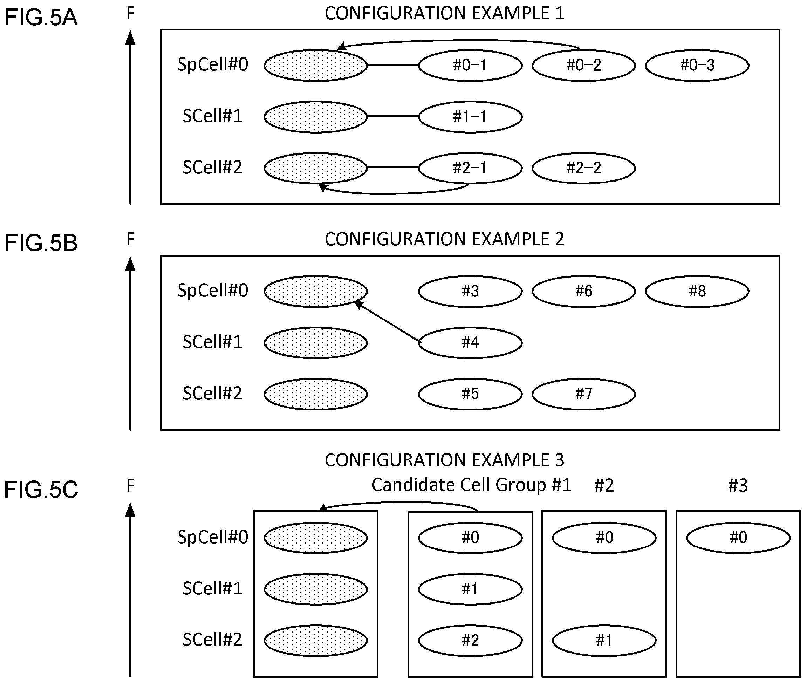

For example, in configuration example 1 of candidate cells, a certain candidate cell may be specified as a serving cell (or indicated for switching with a serving cell) via L1/L2 signaling. FIG. 5A shows a case where candidate cell #0-2 turns to be an SpCell of the MCG/SCG (SpCell #0 and candidate cell #0-2 are switched) by L1/L2 signaling. Also shown is a case where candidate cell #2-1 turns to be an SCell of an MCG/SCG (SCell #2 and candidate cell #2-1 are switched) by L1/L2 signaling.

Alternatively, in configuration example 2 of candidate cells, a certain candidate cell may be specified as a serving cell (or indicated for switching with a serving cell) via L1/L2 signaling. FIG. 5B shows a case where candidate cell #4 turns to be an SpCell of the MCG/SCG (SpCell #0 and candidate cell #4 are switched) by L1/L2 signaling.

Alternatively, in configuration example 3 of candidate cells, a certain candidate cell group (or one or more candidate cells included in the certain candidate cell group) may be changed/updated to a serving cell group via L1/L2 signaling. FIG. 5C shows a case where candidate cell group #1 (or candidate cells #0 to #2 included in candidate cell group #1) turns to be a serving cell group (or the serving cell group and candidate cell group #1 are switched) by L1/L2 signaling. Of the candidate cells (here, candidate cells #0 to #2) included in candidate cell group #1, the candidate cell associated with SpCell #0 or the candidate cell (here, candidate cell #0) configured for the same frequency domain as that of SpCell #0 may be configured as a new SpCell. Alternatively, the candidate cell to turn to be the SpCell may be indicated by L1/L2 signaling.

(Timing Advance Group)

When a plurality of TRPs are used, there are some cases where the distance between a UE and each TRP is different. The plurality of TRPs may be included in the same cell (for example, a serving cell). Alternatively, among the plurality of TRPs, a certain TRP corresponds to the serving cell, while the other TRP(s) may correspond to a non-serving cell(s). In this case, it is also assumed that the distance between each TRP and the UE is different.

In existing systems, transmission timing of a UL (Uplink) channel and/or a UL signal (UL channel/signal) is adjusted by timing advance (TA). Reception timing of a UL channel/signal from a different user terminal (UE) is adjusted on the radio base station (also referred to as a TRP (Transmission and Reception Point), gNB (gNodeB), and the like)) side.

A UE may employ timing advance for each timing advance group (TAG) (multiple timing advances) configured in advance to perform timing control for UL transmission.

When the multiple timing advances is employed, timing advance groups (TAGs) classified according to transmission timing are supported. The UE may control UL transmission timing in each TAG by assuming that the same TA offset (or TA value) is used for each TAG. In other words, the TA offset may be configured independently for each TAG.

When the multiple timing advances are employed, the UE independently adjusting transmission timing for the cells belonging to each TAG enables matching at a radio base station in terms of timing of uplink signal reception from the UE even when a plurality of cells are used.

A TAG (for example, serving cells belonging to the same TAG) may be configured by a higher layer parameter. The same timing advance value may be applied to the serving cells belonging to the same TAG. A timing advance group including an SpCell of a MAC entity may be referred to as a primary timing advance group (PTAG), and a TAG other than the PTAG may be referred to as a secondary timing advance group (STAG).

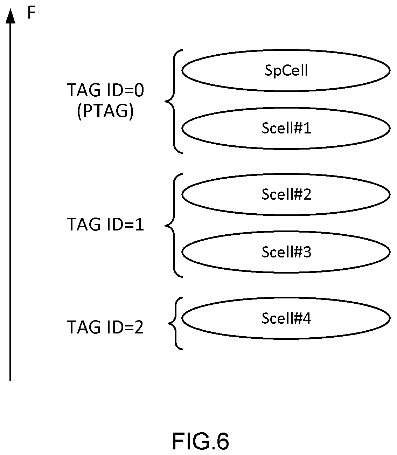

In existing systems (for example, Rel-16 NR), configuration of four TAGs at maximum is supported for each cell group (for example, MCG/SCG) (see FIG. 6). FIG. 6 shows a case where three TAGs are configured for a cell group including an SpCell and SCells #1 to #4. Here, shown is a case where the SpCell and SCell #1 belong to a first TAG (PTAG or TAG #0), SCell #2 and SCell #3 belong to a second TAG (TAG #1), and SCell #4 belongs to a third TAG (TAG #2).

A UE may be notified of a timing advance command (TA command) by using a MAC control element (for example, a MAC CE). The TA command is a command that indicates an uplink channel transmission timing value and is included in the MAC control element. The TA command is signaled from a radio base station to the UE on a MAC layer. The UE controls a certain timer (for example, a TA timer), based on reception of the TA command.

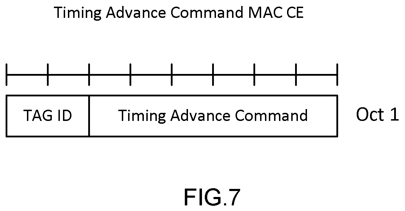

A MAC CE for timing advance command (TAC MAC CE) may have a structure including a field for timing advance group index (for example, TAG ID) and a field for timing advance command (see FIG. 7).

On the other hand, a case is assumed that, in future radio communication systems, a different TAG (or TAG-ID) is configured for each of one or more TRPs corresponding to a certain cell (or CC). For example, regarding multi-TRP operation using multi-DCI, it is assumed that two TAs (or TAGs) are supported for UL transmission.

Alternatively, a case is assumed that different TRPs corresponding to a certain cell share a common TAG. Alternatively, a case where the MAC CE for TA command is applied to only one TRP or a case where the MAC CE for TA command is applied to a plurality of TRPs is assumed.

Alternatively, a case is also assumed that TRPs corresponding to different cells use different TAGs/share a common TAG. For example, it is also assumed that UL transmission is controlled based on common/different timing advance for a serving cell (or a TRP of the serving cell) and a non-serving cell (or a TRP of the non-serving cell) in inter-cell mobility.

In this manner, it is also assumed that, in MIMO of Rel. 18 or later versions, two timing advances (TAs) for two TRPs are supported in multi-TRP operation using multi-DCI.

When the TAG is configured/controlled in a unit of a TRP, a time alignment timer (for example, timeAlignment-Timer) may be configured for each TRP. The time alignment timer may control time in which the MAC entity considers that the serving cell belonging to an associated TAG is uplink time aligned (for example, uplink time aligned). For example, in order to maintain (for example, maintenance) a UL time alignment, the time alignment timer may be configured by RRC.

The time alignment timer (for example, timeAlignmentTimer) may be maintained for the UL time alignment. In Rel. 17, the time alignment timer (for example, timeAlignmentTimer) corresponds to each TAG. When the UE receives a MAC CE for timing advance command (for example, a TAC MAC CE), the UE starts or restarts a time alignment timer associated with each indicated timing advance group (for example, TAG).

When a MAC entity receives the TAC MAC CE, and a certain value ($N_{TA}$) is maintained for the indicated TAG, the MAC entity uses the timing advance command for the indicated TAG or starts or restarts the time alignment timer associated with the indicated TAG. The certain value ($N_{TA}$) may be timing advance between DL and UL.

Operations when the time alignment timer expires may be defined separately for a PTAG and an STAG. Note that a timing advance group (TAG) including an SpCell of a MAC entity may be referred to as a primary timing advance group (PTAG), and a TAG other than the PTAG may be referred to as a secondary timing advance group (STAG).

For example, Rel. 17 supports a case that certain operation for PTAG is applied when a timing advance timer corresponding to a PTAG expires, and certain operation for STAG is applied when a timing advance timer corresponding to an STAG expires.

For example, when such a time alignment timer expires, the following operation (for example, the certain operation for PTAG/certain operation for STAG) may be performed.

{Certain Operation for PTAG}

In a case where the time alignment timer is associated with a PTAG,

- flush (discard) all the HARQ buffers of all serving cells
- notify RRC to release a PUCCH, if configured, for all the serving cells
- notify RRC to release an SRS, if configured
- clear all configured DL assignments and configured UL assignments
- clear a PUSCH resource for semi-persistent CSI report
- cause all running time alignment timers to expire
- maintain $N_{TA}$ of all TAGs

{Certain Operation for STAG}

In a case where the time alignment timer is associated with an STAG, for all serving cells belonging to the TAG,

- flush (discard) all HARQ buffers
- notify RRC to release a PUCCH, if configured
- notify RRC to release an SRS, if configured
- clear all configured DL assignments and UL assignments
- clear a PUSCH resource for semi-persistent CSI report
- maintain $N_{TA}$ of the TAG

(TA Control in Unit of TRP/Panel)

As described above, when communication is performed using a plurality of transmission/reception points (for example, TRPs)/panels, it is also assumed to control timing advance (TA) for each TRP/for each panel.

In NR of Rel. 18 or later versions, it is considered that, regarding a RACH triggered by a PDCCH order and a RACH triggered by the UE, contention based random access (CBRA)/contention free random access (CFRA) is considered/determined in a unit of a TRP or in a unit of a TRP TA (TA of each TRP).

When application/configuration of timing advance is supported for each TRP (or in a unit of a TRP), the UE controls UL transmission (for example, RACH transmission or the like) in each TRP, based on timing advance corresponding to each TRP (or timing advance group to which each TRP belongs).

Information (for example, a TRP index/TRP ID) related to the TRP corresponding to each serving cell may be configured/indicated from the base station to the UE by using RRC/MAC CE/downlink control information. The UE may receive, from the base station, related information related to timing advance corresponding to each TRP (for example, information related to a TA value/timing advance command/time alignment timer or the like).

Each embodiment of the present disclosure may be applied/supported in at least one of intra-cell multi-TRP (Intra-cell M-TRP) and inter-cell multi-TRP (Inter-cell M-TRP).

In the intra-cell multi-TRP, a plurality of TRPs (or activated TCI states of a plurality of TRPs) may be associated with the same cell ID. The cell ID may be a physical cell ID (PCI).

In the inter-cell multi-TRP, a plurality of TRPs (or activated TCI states of a plurality of TRPs) may be associated with different cell IDs (for example, PCIs). For example, in the inter-cell multi-TRP, two TRPs may be interpreted as two TRPs associated with two respective PCIs.

When application/configuration of timing advance is supported for each TRP (or in a unit of a TRP), each TRP may belong to a different TAG. A plurality of TRPs (for example, two TRPs) in the serving cell may belong to two respective TAGs. The TAG may include a plurality of TRPs from a plurality of serving cells. All of the TRPs/serving cells in the TAG apply/maintain the same timing advance (TA)/same time alignment timer.

In the present disclosure, one or more sub-TAGs may be included in the TAG. For example, two TRPs in the serving cell may belong to two respective sub-TAGs, and may belong to one TAG. The sub-TAG may include a plurality of TRPs from a plurality of serving cells. All of the TRPs/serving cells in the sub-TAG apply/maintain the same timing advance (TA)/same time alignment timer.

For example, the TA may be applied to each TRP (or indication in a unit of TRP TA may be performed). For example, at least one of options below may be applied.

{Option 1}

A different TAG-ID may be configured for each TRP, and a different MAC CE for TA command may be configured for each TRP. Each TAG may maintain the time alignment timer for UL time alignment.

{Option 2}

Different TRPs may share the TAG. The MAC CE for TA command may be applied to only one TRP. The UE applies different TA to another TRP. For example, the UE may adjust the TA value for another TRP (for example, TRP #1) by using a TA offset (TA_TRP_offset), based on TA for TRP #0 (TA_TRP #0).

In this case, only one time alignment timer may be present for UL time alignment of a plurality of TRPs. This may mean that the UL time alignment of a plurality of TRPs is simultaneously maintained or lost.

{Option 3}

A single TAG may be provided. A MAC CE for TA command may be applied to a plurality of serving TRPs for the UE.

{Option 4}

A single TAG may be provided. A MAC CE for TA command received in the TRP/CW/PDSCH/DMRS port group may be applied to the same TRP/CW/PDSCH/DMRS port group of the TAG. Each TRP/CW/PDSCH/DMRS port group of the TAG maintains the time alignment timer for UL time alignment.

In this manner, it is also assumed that, in Rel. 18 or later versions, a plurality of timing advances are supported in the multi-TRP (for example, multi-TRP using multi-DCI). For example, a plurality of (for example, two) timing advances may be supported for the multi-TRP (for example, two TRPs) using multi-DCI. Application of a plurality of timing advances for the multi-TRP may be supported in an intra-cell/inter-cell multi-DCI multi-TRP scenario, or may be supported in a plurality of frequency ranges (for example, FR1 and FR2).

(PDCCH Order)

DCI format 1_0 includes a DCI format indicator field, a bit field always set to 1, and a frequency domain resource assignment field. When a cyclic redundancy check (CRC) with DCI format 1_0 is scrambled by a C-RNTI, and all frequency domain resource assignment fields are 1, this DCI format 1_0 is for random access procedure initiated by a PDCCH order, and remaining fields are a random access preamble, a UL/supplementary Uplink (SUL) indicator, an SS/PBCH index (SSB index), a PRACH mask index, and a reserved bit (12 bits).

In a case of PRACH transmission triggered by the PDCCH order, when a value of a random access preamble index field is non-zero, a PRACH mask index field indicates a PRACH occasion for PRACH transmission for which a PRACH occasion is associated with an SS/PBCH block index indicated by an SS/PBCH block index field with the PDCCH order.

(RACH Procedure Triggered by PDCCH Order)

In existing systems (for example, Rel. 17 or earlier versions), regarding RACH procedure for a specific cell (for example, an SpCell), a UE performs, for a PDCCH order RACH, RACH procedure by assuming that a PDCCH order and a PDCCH for RAR have the same QCL properties. The PDCCH for RAR may be a PDCCH transmitted by a base station in response to a PRACH triggered for the UE by the PDCCH order (or transmitted from the UE). A PDSCH scheduled by the PDCCH for RAR may include an RAR. The QCL properties may be interpreted as DMRS QCL properties.

Specifically, when the UE detects, in response to PRACH transmission initiated by a PDCCH order for triggering a CFRA procedure for an SpCell, DCI format 1_0 CRC scrambled by a corresponding RA-RNTI, the UE may assume that a PDCCH including DCI format 1_0 and the PDCCH order have the same DMRS antenna port quasi-co-location properties.

In the existing systems (for example, Rel. 17 or earlier versions), regarding RACH procedure for another cell (for example, an SCell), such a restriction on the specific cell is absent, and the UE is supported to use QCL of a certain CORESET for reception of the PDCCH for RAR. The certain CORESET may be a CORESET associated with a type 1 CSS set (for example, a type 1-PDCCH CSS set).

Specifically, when the UE detects, in response to PRACH transmission initiated by a PDDCCH order for triggering a CFRA procedure for an SCell, DCI format 1_0 CRC scrambled by a corresponding RA-RNTI, the UE may assume DMRS antenna port quasi-co-location properties of a CORESET associated with a type 1-PDCCH CSS set for reception of a PDCCH including DCI format 1_0.

Incidentally, in order to acquire a TA of each TRP (or a TA of the serving cell and the non-serving cell), a RACH for each TRP (or each serving cell/non-serving cell) may be triggered. A case is also considered where, for a PDCCH order for triggering a RACH procedure for the TRP (or the serving cell/non-serving cell), a PDCCH order and a PDCCH for RAR are transmitted from different TRPs. In such a case, it is necessary that a restriction that a PDCCH order and a PDCCH for RAR have the same DMRS QCL properties is relaxed/changed.

For example, a case may be supported where a PDCCH order from TRP #1 triggers a RACH for TRP #2 and where an RAR is transmitted from TRP #2. In this case, a RACH for any TRP can be triggered via a PDCCH order from any TRP, and flexibility of the RACH procedure can be enhanced.

As another example, a case may be supported where a PDCCH order from TRP #2 triggers a RACH for TRP #2 and where an RAR is transmitted from TRP #1. This example may occur in the inter-cell multi-TRP (for example, inter-cell M-TRP) case when the UE cannot receive a type 1 CSS set from the TRP of the non-serving cell.

(Random Access Procedure in MAC Entity)

A random access procedure is initiated by RRC for an event following a PDCCH order, a MAC entity itself, or a specification. In the MAC entity, only one ongoing random access procedure is present at an any timing. A random access procedure for an SCell is initiated only by a PDCCH order with ra-PreambleIndex different from 0b000000.

When the random access procedure is initiated on a serving cell, the MAC entity performs the following.

- Configuring RA_TYPE as 4-stepRA when a random access procedure is initiated by a PDCCH order, and ra-PreambleIndex explicitly provided by a PDCCH is not 0b000000 or when a random access procedure is initiated for reconfiguration with synchronization, and a contention-free random access resource of a 4-step RA type is explicitly provided by rach-ConfigDedicated for a BWP selected for the random access procedure.

When selected RA_TYPE is configured as 4-stepRA, the MAC entity performs the following.

- Setting PREAMBLE_INDEX to notified ra-PreambleIndex and selecting an SSB notified by the PDCCH, when ra-PreambleIndex is explicitly provided from the PDCCH, and ra-PreambleIndex is not 0b000000, and
- determining, when the SSB is selected as described above, a subsequent available PRACH occasion among PRACH occasions corresponding to the selected SSB and allowed by a restriction given by ra-ssb-OccasionMaskIndex (The MAC entity randomly selects, with equal probability, a PRACH occasion from consecutive PRACH occasions corresponding to the selected SSB, in accordance with a specification. The MAC entity may, when determining the subsequent available PRACH occasion corresponding to the selected SSB, consider a possibility of occurrence of a measurement gap).

For example, when a new random access procedure is initiated while another random access procedure is already in progress in the MAC entity, whether to continue the ongoing procedure or initiate the new procedure (such as an SI request) depends on UE implementation.

When an ongoing random access procedure triggered by a certain PDCCH order is present while the UE is receiving another PDCCH order indicating the same random access preamble, PRACH mask index, and UL carrier, the procedure is regarded as the same random access procedure as that in progress and is not reinitialized.

(Contention Resolution)

When a Msg3 is transmitted, the MAC entity follows operation 1 to operation 4 below.

{Operation 1} If the Msg3 is transmitted on a non-terrestrial network, the MAC entity starts ra-ContentionResolutionTimer, and resumes the timer in each HARQ retransmission in the first symbol after a timing obtained by adding a UE estimation of UE-gNB RTT to an end of the Msg3.

{Operation 2} Instead, if the Msg3 transmission (initial transmission or HARQ retransmission) is scheduled with type A PUSCH repetition, the MAC entity starts or resumes ra-ContentionResolutionTimer in the first symbol after an end of all repetitions of the Msg3 transmission.

{Operation 3} Otherwise, the MAC entity starts or resumes ra-ContentionResolutionTimer in the first symbol after an end of the Msg3 transmission.

{Operation 4} The MAC entity monitors a PDCCH while ra-ContentionResolutionTimer is running, irrespective of a possibility of occurrence of a measurement gap.

Step 4 (Msg4) in an RA procedure of Rel-16 NR follows step 4 operation below.

{Step 4 Operation}

When the UE is not provided with a C-RNTI, the UE attempts to detect DCI format 1_0 with a CRC scrambled by a corresponding TCI-RNTI and for scheduling a PDCSH including a UE contention resolution identity, in response to PUSCH transmission scheduled by an RAR UL grant. In response to receiving the PDSCH including the UE contention resolution identity, the UE transmits HARQ-ACK information in a PUCCH. The PUCCH transmission is performed in the same active UL BWP as that for the PUSCH transmission. Minimum time between the last symbol for the PDSCH reception and the first symbol for the corresponding PUCCH transmission including the HARQ-ACK information is equal to $N\_T,1$ [msec]. $N\_T,1$ is a time duration of $N\_T,1$ symbols corresponding to PDSCH processing time for UE processing capability 1 in a case where an additional PDSCH DM-RS is configured. For $\mu=0$, the UE assumes that $N\_T,1 = 14$.

When detecting a DCI format in response to PUSCH transmission scheduled by an RAR UL grant or in response to corresponding PUSCH retransmission scheduled by DCI format 0_0 with a CRC scrambled by a TC-RNTI provided by a corresponding RAR message, the UE may assume, for a PDCCH that delivers the DCI format, the same DM-RS antenna port quasi co-location (QCL) properties as DM-RS antenna port QCL properties for an SS/PBCH block used by the UE for PRACH association, irrespective of whether the UE is provided with a TCI state for a CORESET with which the UE has received the PDCCH with the DCI format.

When CA is configured, in a 4-step RA-type random access procedure, the first three steps of CBRA may always occur in a PCell. In this case, the contention resolution (step 4) may be cross-scheduled by the PCell. The three steps of CFRA initiated in the PCell remain on the PCell. CFRA in an SCell may be initiated only by the gNB to establish timing advance of an STAG. This procedure may be initiated by the gNB with the PDCCH order (step 0) transmitted in a scheduling cell of the SCell activated in the STAG. The preamble transmission (step 1) may be performed in the indicated SCell. The RAR (step 2) may be performed in the PCell. In this manner, in the existing systems, in the RACH procedure in the Scell, the PDCCH order is transmitted in the active Scell.

(Activation/Deactivation of SCell)

When the MAC entity is configured with one or more SCells, a network (NW) can activate/deactivate the configured SCell(s). After the SCell(s) is configured, the SCell(s) remains deactivated as long as a parameter (sCellState) is not configured to be activated for the SCell(s), by a higher layer.

The configured one or plurality of SCells may be activated/deactivated based on at least one of the following conditions:

- An SCell Activation/Deactivation MAC CE is received.
- An enhanced SCell Activation/Deactivation MAC CE is received.
- A timer (sCellDeactivationTimer) is configured for each SCell (except for an SCell configured with a PUCCH). Note that, when the timer expires, the related SCell is deactivated.
- sCellState is configured for each configured SCell. In this case, the related SCell is activated based on an SCell configuration.

When the SCell is deactivated, the UE may perform/assume the following operations:

- Transmit no SRS in the SCell.
- Report no CSI in the SCell.
- Transmit no UL-SCH in the SCell.
- Transmit no RACH in the SCell.
- Monitor no PDCCH in the SCell.
- Monitor no PDCCH for the SCell.
- Transmit no PUCCH in the SCell.

HARQ feedback for MAC Protocol Data Unit (PDU) including the SCell Activation/Deactivation MAC CE or the Enhanced SCell Activation/Deactivation MAC CE is not affected by interruption of a PCell/PSCell/PUCCH-SCell caused by the Scell activation/deactivation. On the other hand, when the SCell is deactivated, an ongoing random access procedure in the SCell, if any, is interrupted.

(Time Gap Between PDCCH Order Reception and PRACH Transmission)

If a random access procedure has been initiated by a PDCCH order, the UE transmits, if requested by a higher layer, a PRACH in a selected PRACH occasion in a case where time between the last symbol for PDCCH order reception and the first symbol for PRACH transmission is $N_{T,2} + \Delta_{BWPSwitching} + \Delta_{Delay} + T_{switch}$ [msec] or greater (time condition), as described in a specification.

Here, $N_{T,2}$ is a time duration of $N_2$ symbols corresponding to PUSCH preparation time for UE processing capability 1. $\mu$ corresponds to an SCS configuration for the PRACH transmission. For example, assume that $\mu$ corresponds to a minimum SCS configuration between a subcarrier spacing (SCS) configuration for the PDCCH order and an SCS configuration for the PRACH transmission corresponding to the PDCCH order.

$\Delta_{BWPSwitching} = 0$ when an active UL BWP does not change, otherwise $\Delta_{BWPSwitching}$ is defined in a specification.

In FR1, $\Delta_{Delay} = 0.5$ msec, and in FR2, $\Delta_{Delay} = 0.25$ msec.

$T_{switch}$ is a switching gap duration defined in a specification.

For PRACH transmission using 1.25 kHz or 5 kHz SCS, the UE determines $N_2$ by assuming that SCS configuration $\mu = 0$.

When the UE is provided with $K_{cell,offset}$ by CellSpecific_Koffset, the PRACH occasion is after slot $n + 2^{\mu} \cdot K_{cell,offset}$. Here, n is the slot for the UL BWP for the PRACH transmission overlapping an end of the PDCCH order reception based on the assumption that $T_{TA} = 0$. $\mu$ corresponds to an SCS configuration for the PRACH transmission. When PDCCH reception for the PDCCH order includes two PDCCH candidates from two search space sets linked to each other based on searchSpaceLinkingId, a final symbol for the PDCCH reception is a final symbol for the PDCCH candidate to be ended later. Even in a case where the UE does not need to monitor any one of the two PDCCH candidates, the PDCCH reception includes the two PDCCH candidates.

When the UE attempts to detect, in response to PRACH transmission initiated by a PDCCH order for triggering a CFRA procedure for an SpCell, DCI format 1_0 with a CRC scrambled by a corresponding RA-RNTI, the UE may assume that a PDCCH including DCI format 1_0 and the PDCCH order have the same DM-RS antenna port QCL properties.

When the UE attempts to detect, in response to PRACH transmission initiated by a PDCCH order for triggering a CFRA procedure for an SCell, DCI format 1_0 with a CRC scrambled by a corresponding RA-RNTI, the UE may assume DMRS antenna port QCL properties of a CORESET associated with a type 1-PDCCH CSS set configured for reception of a PDCCH including DCI format 1_0.

In this manner, a timing of the PRACH occasion is associated with $\mu$ and CellSpecific_Koffset.

(RACH Procedure for Non-Serving Cell for L1/L2-Centric Inter-Cell Mobility)

When RRC configures one or more pieces of non-serving cell information for the UE, a RACH configuration for a non-serving cell(s) may be included. Examples of a case where a RACH for a candidate cell triggered by a PDCCH order is supported include options 1 to 3 below.

<Option 1>

The UE may judge, based on a certain parameter used for a PDCCH with a PDCCH order, a cell to which the PDCCH order (or a PRACH transmitted in response to the PDCCH order) corresponds. The certain parameter may be, for example, a TCI state.

For example, when the base station transmits a PDCCH order for a PRACH, and a PDCCH (or DCI/CORESET) is associated with a TCI state from a non-serving cell, the PRACH requested by the PDCCH order may correspond to the non-serving cell. In this case, the UE may control PRACH transmission, based on a PRACH configuration for the non-serving cell. Subsequently, the UE may judge a TA of the non-serving cell, based on DL transmission (for example, RAR) fed back for the PRACH transmission.

When the PDCCH (or DCI/CORESET) is associated with a TCI state from a serving cell, the PRACH requested by the PDCCH order may correspond to the serving cell. In this case, the UE may control PRACH transmission, based on a PRACH configuration for the serving cell. Subsequently, the UE may judge a TA of the serving cell, based on DL transmission (for example, RAR) fed back for the PRACH transmission.

<Option 2>

The UE may judge, based on DCI (or a CORESET) used for a PDCCH order, a cell to which the PDCCH order (or a PRACH transmitted in response to the PDCCH order) corresponds.

For example, the UE may be notified of the DCI used for the PDCCH order, the DCI including identification information (for example, a cell index/cell type (for example, serving cell/non-serving cell)) on the cell to which the PRACH corresponds. In a certain DCI format used for the PDCCH order (for example, DCI format 1_0), to explicitly indicate a serving cell/non-serving cell to which the PRACH corresponds, X reserved bits of the DCI may be used to notify the cell. The reserved bits may be reserved bits included in DCI format 1_0 in an existing system (for example, Rel. 15/16).

A bit size of X may be configured/judged/determined based on the number of configured non-serving cells. For example, X may be 1 bit when one non-serving cell is configured. In this case, '0' may indicate a serving cell, and '1' may indicate a non-serving cell. For a field used to notify the cell identification information, the most significant bit (MSB) or least significant bit (LSB) of reserved bits may be used.

X may be 2 bits when three non-serving cells are configured. To indicate the non-serving cell, a re-indexing non-serving cell index may be applied. Association between the cell index and a bit value (or a codepoint) may be defined in a specification or may be configured by higher layer signaling or the like. For example, a codepoint '0' or '00' may indicate a serving cell, and remaining bits may be associated in order (for example, increasing/decreasing order) of indices of the configured non-serving cells.

Alternatively, the size of X may be fixed, and the number of bits may not be changed, irrespective of the number of configured non-serving cells. In this case, an unused bit/field may be configured as a reserved bit.

<Option 3>

In a case where a random access preamble index (for example, ra-PreambleIndex) is a certain value (for example, 0 to 63), part of a preamble may be configured/activated to be associated with a non-serving cell, by RRC/MAC CE.

In this case, a certain field of a certain DCI format (for example, DCI format 1_0) may indicate information on a serving cell/non-serving cell. The certain field may be, for example, a random access preamble index field. Note that the preamble configuration associated with the non-serving cell may be applied to only PRACH transmission based on a PDCCH order (or may not be applied to contention-based PRACH transmission).

When DCI indicates a preamble associated with a non-serving cell, the UE may perform control so as to perform PRACH transmission with the indicated preamble in accordance with a RACH configuration for the non-serving cell.

The UE may adjust a TA of indicated one or more cells after a PRACH based on the PDCCH order. Information related to the TA may be received via a response signal (for example, RAR) for the PRACH transmission.

(Active DL TCI State Switch (Switching) Delay for Unified TCI State)

An active DL TCI state switching delay requirement for a unified TCI state may be applied to a UE configured with a parameter (DLorJoint-TCIState) for a DL channel in a serving cell.

The requirement may also be applied to all serving cell lists, "simultaneousU-TCI-UpdateList1," "simultaneousU-TCI-UpdateList2," "simultaneousU-TCI-UpdateList3," and "simultaneousU-TCI-UpdateList4" in MR-DC/standalone NR, provided that all the serving cells in a list are configured with the same serving cell and BWP in a parameter (unifiedTCI-StateRef-r17).

The UE is required to complete active DL TCI state switching within latency (TCI state switching delay).

In a case where a target DL TCI state indicates an additional PCI different from a PCI of a configured serving cell, the requirement may be applied when the following conditions are satisfied.

- An active BWP of the serving cell is the same as that of a cell with the additional PCI.
- A center frequency, SCS, and SFN offset of the cell with the additional PCI are the same as those of the serving cell.
- The cell with the additional PCI is known to the UE.

The cell with the additional PCI may be known when the following conditions are satisfied.

- In the last 5 seconds before a measurement value of L1-RSRP is configured, the UE has transmitted a valid L3 measurement report to the cell with the additional PCI.
- A timing offset between the serving cell and the cell with the additional PCI is within a CP of a corresponding SCS.

Otherwise (when these conditions are not satisfied), the cell with the additional PCI is unknown.

A MAC CE-based downlink TCI state switching delay requirement is applied to DL TCI state switching by using a frame for unified TCI state (separate DL TCI state/joint TCI state) switching.

When a source RS with a DL TCI state/joint TCI state is associated with a PCI different from that of the serving cell, the present requirement is applied if a cell with the different PCI satisfies the conditions for the known cell described above. When the conditions for the known cell are not satisfied, a longer delay may be expected.

In a case of joint TCI state switching, unless a target PL-RS is maintained, the UE is not expected to perform DL reception based on a target TCI state before completing DL TCI state and UL TCI state switching.

When the target TCI state is known, if the UE receives, in slot n, a PDSCH delivering (including) a MAC CE activation command, the UE can receive, in the first slot after a certain slot, a UE-dedicated PDCCH/PDSCH by applying the target TCI state for the serving cell with occurrence of TCI state switching.

Here, the certain slot described above may be the $(n + T_{HARQ} + 3N_{slot}^{subframe,\mu} + TO_k * (T_{first-SSB} + T_{SSB-proc})/NR$ slot length)-th slot.

The UE can receive a UE-dedicated PDCCH/PDSCH in the first to $(n + T_{HARQ} + 3N_{slot}^{subframe,\mu})$-th slots by applying a previous TCI state. Here, $T_{HARQ}$ in the certain slot is a timing between DL data transmission and acknowledgement.

Also,

- $T_{first-SSB}$ is a time for the first SSB transmission after a MAC CE to be decoded by the UE. The SSB corresponds to QCL type A/type C for the target TCI state.
- $T_{SSB-proc}$ is, for example, 2 ms (milliseconds).
- $TO_k$ is 1 when there is not the target TCI state in a list of active TCI states for the PDSCH/PDCCH, and otherwise is 0.

(Analysis)

Incidentally, for the time gap between a PDCCH order for LTM and PRACH transmission corresponding to the PDCCH order described above, it is studied that a longer time gap is applied in a certain specific scenario.

As the certain specific scenario, the following scenario is assumed, for example.

- A case of a PDCCH order based PRACH in a candidate cell other than a current serving cell with a PUCCH/PUSCH or being not in a frequency (relationship) with the current serving cell.

In such a case, when additional latency is required, it is necessary to define a new value corresponding to the latency.

It is also necessary to verify, in the candidate cell other than the current serving cell with the PUCCH/PUSCH, influence of PRACH transmission (Tx) on UL transmission (Tx) to the serving cell.

It is also necessary to verify, when the values of $\Delta_{BWPSwitching}$ and $\Delta_{Delay}$ described above are required to be updated, whether values corresponding to these and a UE capability corresponding to these are necessary.

As described above, unless the time gap between a PDCCH order for LTM and PRACH transmission corresponding to the PDCCH order is clearly defined for the specific scenario, an appropriate RACH procedure fails, which may become a factor preventing improvement of communication throughput.

Thus, the inventors of the present invention focused on a time gap between a PDCCH order for LTM and PRACH transmission corresponding to the PDCCH order, and came up with the idea of one aspect of the present embodiment.

(Various Interpretations and so on)

Embodiments according to the present disclosure will be described in detail with reference to the drawings as follows. The radio communication methods according to the embodiments may each be employed individually, or may be employed in combination.

In the present disclosure, "A/B" and "at least one of A and B" may be interchangeably interpreted. In the present disclosure, "A/B/C" may mean "at least one of A, B, and C."

In the present disclosure, notify, activate, deactivate, indicate, select, configure, update, determine, and the like may be interchangeably interpreted. In the present disclosure, "support," "control," "controllable," "operate," "operable," and the like may be interchangeably interpreted.

In the present disclosure, radio resource control (RRC), an RRC parameter, an RRC message, a higher layer parameter, a field, an information element (IE), a configuration, and the like may be interchangeably interpreted. In the present disclosure, a Medium Access Control control element (MAC Control Element (CE)), an update command, an activation/deactivation command, and the like may be interchangeably interpreted.

In the present disclosure, the higher layer signaling may be, for example, any one or combinations of Radio Resource Control (RRC) signaling, Medium Access Control (MAC) signaling, broadcast information, and the like.

In the present disclosure, the MAC signaling may use, for example, a MAC control element (MAC CE), a MAC Protocol Data Unit (PDU), or the like. The broadcast information may be, for example, a master information block (MIB), a system information block (SIB), minimum system information (Remaining Minimum System Information (RMSI)), other system information (OSI), or the like.

In the present disclosure, the physical layer signaling may be, for example, downlink control information (DCI), uplink control information (UCI), or the like.

In the present disclosure, an index, an identifier (ID), an indicator, a resource ID, and the like may be interchangeably interpreted. In the present disclosure, a sequence, a list, a set, a group, a cluster, a subset, and the like may be interchangeably interpreted.

In the present disclosure, a panel, a UE panel, a panel group, a beam, a beam group, a precoder, an Uplink (UL) transmission entity, a transmission/reception point (TRP), a base station, spatial relation information (SRI), a spatial relation, an SRS resource indicator (SRI), a control resource set (CORESET), a Physical Downlink Shared Channel (PDSCH), a codeword (CW), a transport block (TB), a reference signal (RS), an antenna port (for example, a demodulation reference signal (DMRS) port), an antenna port group (for example, a DMRS port group), a group (for example, a spatial relation group, a code division multiplexing (CDM) group, a reference signal group, a CORESET group, a Physical Uplink Control Channel (PUCCH) group, a PUCCH resource group), a resource (for example, a reference signal resource, an SRS resource), a resource set (for example, a reference signal resource set), a CORESET pool, a downlink Transmission Configuration Indication state (TCI state) (DL TCI state), an uplink TCI state (UL TCI state), a unified TCI state, a common TCI state, quasi-co-location (QCL), QCL assumption, and the like may be interchangeably interpreted.

A spatial relation information Identifier (ID) (TCI state ID) and spatial relation information (TCI state) may be interchangeably interpreted. "Spatial relation information" may be interchangeably interpreted as "a set of spatial relation information", "one or a plurality of pieces of spatial relation information", and the like. The TCI state and the TCI may be interchangeably interpreted.

In the present disclosure, a TRP, a CORESET pool index (CORESETPoolIndex), a TRP ID, an ID related to a TRP, a TAG ID, a group of TCI states, a group of spatial relations, a group of QCL source RSs, a group of DL RSs, a group of path loss RSs, and a PCI (for inter-cell multi-TRP) may be interchangeably interpreted.

In the present disclosure, being associated with a different TRP, being associated with a different CORESET pool index (CORESETPoolIndex), being associated with a different TRP ID, being associated with a different ID related to a TRP, being associated with a different TAG ID, being associated with a different group of TCI states, being associated with a different group of spatial relations, being associated with a different group of QCL source RSs, being associated with a different group of DL RSs, being associated with a different group of path loss RSs, and being associated with a different PCI (for inter-cell multi-TRP) may be interchangeably interpreted.

Each embodiment of the present disclosure may be applied to at least one of intra-cell multi-TRP and inter-cell multi-TRP.

In the present disclosure, the intra-cell multi-TRP may mean that activated TCI states of a plurality of (for example, two) TRPs are associated with the same PCI.

In the present disclosure, the inter-cell multi-TRP may mean that activated TCI states of a plurality of (for example, two) TRPs are associated with different PCIs.

In the present disclosure, in a case of the inter-cell multi-TRP, a plurality of (for example, two) TRPs may mean a plurality of (for example, two) TRPs associated with a plurality of (for example, two) PCIs.

In the present disclosure, a non-serving cell, an additional cell, a candidate cell, and a target cell may be interchangeably interpreted.

The embodiments to be described below may be applied when a RACH procedure per TRP (or per serving cell/additional cell/non-serving cell) is configured/supported. Alternatively, the embodiments to be described below may be applied when timing advance/timing advance group per TRP (or per serving cell/additional cell/non-serving cell) is configured/supported.

(Radio Communication Method)

<First Embodiment>

A first embodiment relates to a time gap (time condition) between a PDCCH order for a certain specific scenario and PRACH transmission corresponding to the PDCCH order.

The certain specific scenario may be the following.

- A case of a PDCCH order based PRACH in a candidate cell other than a current serving cell with a PUCCH/PUSCH or being not in a frequency (relationship) with the current serving cell.

For the above case, a time gap between a PDCCH order and PRACH transmission corresponding to the PDCCH order may be newly defined.

More specifically, for a time between the last symbol for PDCCH order reception and the first symbol for the PRACH transmission, the following new parameter may be added in addition to an existing parameter. The additional parameter may be referred to as additional latency, additional delay component, or additional time.

$$(T_{SSB})$$

$T_{SSB}$ is a parameter for SSB-based time/frequency (T/F) tracking.

<Condition 1>

When a TCI state for a target cell is activated before a RACH with the PDCCH order, an SSB index indicated by the PDCCH order is present in an active TCI state list, and a measurement period for L1-RSRP is not longer than 160 ms (is 160 ms or less), a UE does not require (does not apply) an additional time $T_{SSB}$ for SSB-based time/frequency tracking to satisfy a UL transmit timing requirement. In other words, in this case, $T_{SSB} = 0$.

<Condition 2>

When the SSB index indicated by the PDCCH order is absent in the active TCI state list activated for the target cell, and the measurement period for L1-RSRP is not longer than 160 ms (is 160 ms or less), whether the UE requires (applies) the additional time $T_{SSB}$ may be defined by a specification. A value of $T_{SSB}$ as required may be defined by the specification.

<Condition 3>

When none of conditions 1 to 2 described above is satisfied, the UE may require (apply) the additional time $T_{SSB}$. A value of $T_{SSB}$ in this case may be defined by the specification.
In other words, the UE may judge, based on the SSB index indicated by the PDCCH order, whether $T_{SSB}$ can be applied.

$$(\Delta_{RF/BB\_preparation})$$

$\Delta_{RF/BB\_preparation}$ is a parameter related to RF (Radio Frequency)/BB (Base Band) preparation and re-tuning.

<Condition 1>

When a bandwidth of a PRACH in a neighbor cell is within an active UL BWP, a value of $\Delta_{RF/BB\_preparation}$ may be defined by the specification.

<Condition 2>

When the bandwidth of the PRACH is outside the active UL BWP, but is within one of UL BWPs configured in any active serving cell, a value of $\Delta_{RF/BB\_preparation}$ may employ a value of a DCI-based BWP switching delay defined by the specification. Note that the value of the DCI-based BWP switching delay may be determined in accordance with a UE capability.

<Condition 3>

When none of conditions 1 to 2 described above is satisfied, that is, when the bandwidth of the PRACH is absent in any one of the UL BWPs configured in any active serving cell, a value of $\Delta_{RF/BB\_preparation}$ may be defined by the specification.
In other words, $\Delta_{RF/BB\_preparation}$ may be determined based on a positional relationship of the bandwidth of the PRACH in a frequency direction relative to a certain active UL BWP. Alternatively, $\Delta_{RF/BB\_preparation}$ may be determined based on whether the bandwidth of the PRACH is included in a certain active UL BWP.
In consideration of these new parameters, the time gap between the PDCCH order and the PRACH transmission corresponding to the PDCCH order, that is, the time between the last symbol for PDCCH order reception and the first symbol for the PRACH transmission, may be expressed as the following expression.

$$N_{T,2} + \Delta_{BWPSwitching} + \Delta_{Delay} + T_{switch} + T_{SSB} + \Delta_{RF/BB\_preparation}$$

{Example of Description of Specification}

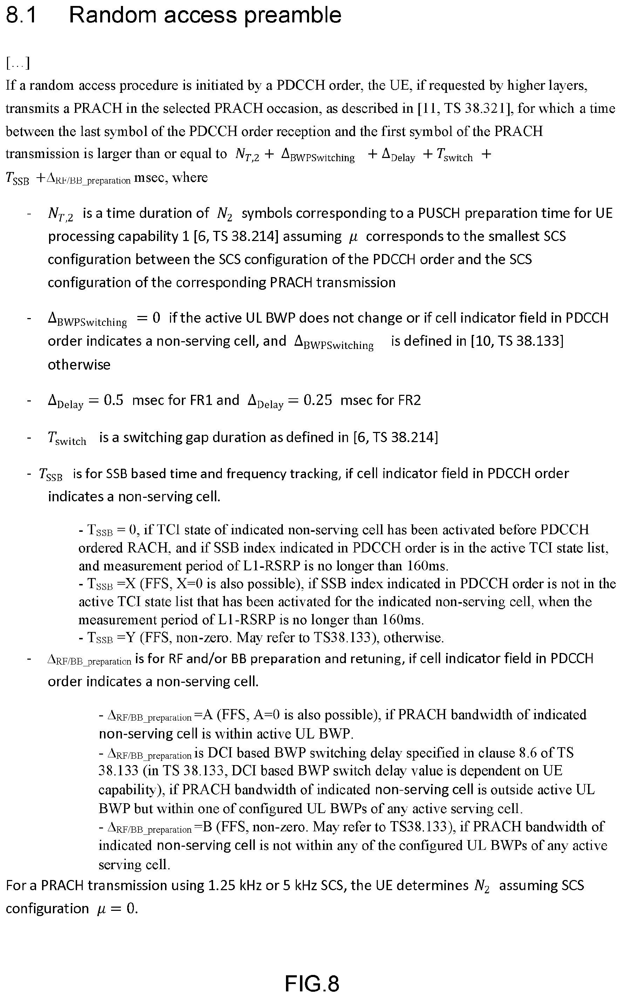

An example of description of the specification will be described with reference to FIG. 8. FIG. 8 is a diagram to show an example of description of the specification according to the first embodiment.

If a random access procedure has been initiated by the PDCCH order, the UE transmits, if requested by a higher layer, a PRACH in a selected PRACH occasion in a case where a time between the last symbol for PDCCH order reception and the first symbol for PRACH transmission is $N_{T,2} + \Delta_{BWPSwitching} + \Delta_{Delay} + T_{switch} + T_{SSB} + \Delta_{RF/BB\_preparation}$ [msec] or greater (time condition), as described in the specification.

Here, $N_{T,2}$ is a time duration of $N_2$ symbols corresponding to PUSCH preparation time for UE processing capability 1 in a case where $\mu$ corresponding to an SCS configuration for PRACH transmission is assumed to correspond to a minimum SCS configuration between a subcarrier spacing (SCS) configuration for the PDCCH order and an SCS configuration for the PRACH transmission corresponding to the PDCCH order.

$\Delta_{BWPSwitching} = 0$ when an active UL BWP does not change or when a cell indicator field in the PDCCH order indicates a non-serving cell, otherwise $\Delta_{BWPSwitching}$ is defined in a specification.

In FR1, $\Delta_{Delay} = 0.5$ msec, and in FR2, $\Delta_{Delay} = 0.25$ msec.

$T_{switch}$ is a switching gap duration defined in a specification.

When the cell indicator field in the PDCCH order indicates a non-serving cell, $T_{SSB}$ is an additional time capable of being applied for SSB-based time and frequency tracking.

When a TCI state for a target cell is activated before a RACH with the PDCCH order, an SSB index indicated by the PDCCH order is present in an active TCI state list, and a measurement period for L1-RSRP is not longer than 160 ms (is 160 ms or less), $T_{SSB} = 0$.

When the SSB index indicated by the PDCCH order is absent in the active TCI state list activated for the target cell, and the measurement period for L1-RSRP is not longer than 160 ms (is 160 ms or less), $T_{SSB} = X$. Here, X may be any value including 0, and may be defined by a specification.

When none of the conditions above is satisfied, $T_{SSB} = Y$. Here, Y may be any value excluding 0, and may be defined by a specification.

When the cell indicator field in the PDCCH order indicates a non-serving cell, $\Delta_{RF/BB\_preparation}$ is an additional time capable of being applied for RF (Radio Frequency)/BB (Base Band) preparation and re-tuning.

When a bandwidth of a PRACH in the indicated non-serving cell is within an active UL BWP, $\Delta_{RF/BB\_preparation} = A$. Here, A may be any value including 0, and may be defined by a specification.

When the bandwidth of the PRACH in the indicated non-serving cell is outside the active UL BWP, but is within one of UL BWPs configured in any active serving cell, $\Delta_{RF/BB\_preparation}$ may be a value of a DCI-based BWP switching delay defined by a specification. Note that the value of the DCI-based BWP switching delay may be determined in accordance with a UE capability.

When the bandwidth of the PRACH in the indicated non-serving cell is absent (is not included) in any one of the UL BWPs configured in any active serving cell, $\Delta_{RF/BB\_preparation} = B$. Here, B may be any value excluding 0, and may be defined by a specification.

For PRACH transmission using 1.25 kHz or 5 kHz SCS, the UE determines $N_2$ by assuming that SCS configuration $\mu = 0$.

{Variations}

"When the cell indicator field in the PDCCH order indicates a non-serving cell" described above may be interpreted as any one of the following, and vice versa.

- When the cell indicator field in the PDCCH order indicates a candidate cell
- When the cell indicator field in the PDCCH order indicates a candidate cell other than a current serving cell
- When the cell indicator field in the PDCCH order indicates a candidate cell other than a current serving cell with (including) a PUCCH/PUSCH
- When the cell indicator field in the PDCCH order indicates a candidate cell other than a current serving cell with a PUCCH/PUSCH or being not in a frequency (relationship) with the current serving cell.

In other words, in the present disclosure, a non-serving cell and a candidate cell may be interchangeably interpreted.

For the value of $T_{SSB} = Y$ described above, the same value as $(T_{first-SSB} + T_{SSB-proc})$/NR slot length in the TCI state switching delay described above may be used. In other words, $T_{SSB}$ may be a value associated with an SSB periodicity/first SSB reception.

According to the first embodiment described above, the UE can appropriately control a RACH procedure (PRACH transmission) in LTM.

<Supplements>

{Notification of Information to UE}

Notification of any information to a UE (from a network (NW) (for example, a base station (BS))) (in other words, reception of any information from the BS in the UE) in the above-described embodiments may be performed by using physical layer signaling (for example, DCI), higher layer signaling (for example, RRC signaling, MAC CE), a specific signal/channel (for example, a PDCCH, a PDSCH, a reference signal), or a combination of these.

When the notification is performed by a MAC CE, the MAC CE may be identified by a new logical channel ID (LCID) not defined in an existing standard being included in a MAC subheader.

When the notification is performed by DCI, the notification may be performed by a specific field of the DCI, a radio network temporary identifier (RNTI) used for scrambling of cyclic redundancy check (CRC) bits given to the DCI, a format of the DCI, or the like.

Notification of any information to a UE in the above-described embodiments may be performed periodically, semi-persistently, or aperiodically.

{Notification of Information from UE}

Notification of any information from a UE (to an NW) (in other words, transmission/reporting of any information to the BS from the UE) in the above-described embodiments may be performed by using physical layer signaling (for example, UCI), higher layer signaling (for example, RRC signaling, MAC CE), a specific signal/channel (for example, a PUCCH, a PUSCH, a PRACH, a reference signal), or a combination of these.

When the notification is performed by a MAC CE, the MAC CE may be identified by a new LCID not defined in existing standards being included in a MAC subheader.

When the notification is performed by UCI, the notification may be transmitted by using a PUCCH or a PUSCH.

Notification of any information from a UE in the above-described embodiments may be performed periodically, semi-persistently, or aperiodically.

{Regarding Application of Each Embodiment}

At least one of the above-described embodiments may be applied to a case satisfying a specific condition. The specific condition may be defined in a standard, or a UE/BS may be notified of the specific condition by using higher layer signaling/physical layer signaling.

At least one of the above-described embodiments may be applied only to a UE that has reported a specific UE capability or that supports the specific UE capability.

The specific UE capability may indicate at least one of the following:

- supporting of specific processing/operation/control/information for at least one of the embodiments above
- supporting of two TAs for multi-TRP
- supporting of two TAs for intra-cell multi-TRP (for example, intra-cell M-TRP)
- supporting of two TAs for inter-cell multi-TRP (for example, inter-cell M-TRP)
- supporting of L1/L2 inter-cell mobility
- supporting of PDCCH monitoring for a candidate cell/inactive candidate cell/inactive SCell
- supporting of a maximum number of cells/TAGs/reference CCs to be a target of PDCCH monitoring
- supporting of a cross-carrier (cross-CC) PDCCH order
- supporting of a time gap between a PDCCH order and PRACH transmission corresponding to the PDCCH order
- supporting of additional parameters related to a time gap ($T_{SSB}$, $\Delta_{RF/BB\_preparation}$)
- supporting of a TCI state switching delay

The specific UE capability may be capability applied over all the frequencies (commonly irrespective of frequency), capability per frequency (for example, one or a combination of cell, band, band combination, BWP, component carrier, and the like), capability per frequency range (for example, Frequency Range 1 (FR1), FR2, FR3, FR4, FR5, FR2-1, FR2-2), capability per subcarrier spacing (SCS), or capability per Feature Set (FS) or Feature Set Per Component-carrier (FSPC).

The specific UE capability may be capability applied over all the duplex schemes (commonly irrespective of duplex scheme) or capability per duplex scheme (for example, time division duplex (TDD) or frequency division duplex (FDD)).

At least one of the above-described embodiments may be applied when the UE is configured/activated/triggered with specific information related to the above-described embodiment (or performance of the operation of the above-described embodiment) by higher layer signaling/physical layer signaling. For example, the specific information may be information indicating enabling of 8TX UL transmission, any RRC parameter for a specific release (for example, Rel. 18/19), or the like.

When the UE does not support at least one of the specific UE capabilities above or is not configured with the specific information, operation of Rel. 15/16 may be applied, for example.

(Supplementary Notes)

Regarding one embodiment of the present disclosure, the following supplementary notes of the invention will be given.

{Supplementary Note 1}

A terminal including:

a transmitting section that performs random access channel (PRACH) transmission triggered by a downlink control channel (PDCCH) order; and

a control section that controls timing of the PRACH transmission by taking account of at least one of a first parameter for synchronization signal block (SSB)-based time and frequency tracking and a second parameter for radio frequency (RF) and base band (BB) preparation, for a time gap between PDCCH order reception and the PRACH transmission.

{Supplementary Note 2}

The terminal according to supplementary note 1, wherein the control section judges application of the first parameter, based on an SSB index indicated by the PDCCH order.

{Supplementary Note 3}

The terminal according to supplementary note 1 or 2, wherein the second parameter is determined based on whether a PRACH bandwidth is included in an active uplink bandwidth part (UL BWP).

{Supplementary Note 4}

The terminal according to any one of supplementary notes 1 to 3, wherein the control section applies a transmission configuration indication (TCI) state switching delay requirement to the first parameter.

(Radio Communication System)

Hereinafter, a structure of a radio communication system according to one embodiment of the present disclosure will be described. In this radio communication system, the radio communication method according to each embodiment of the present disclosure described above may be used alone or may be used in combination for communication.

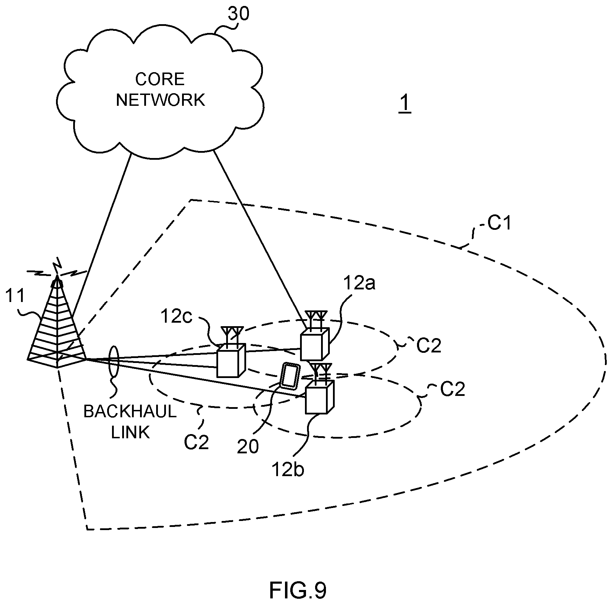

FIG. 9 is a diagram to show an example of a schematic structure of the radio communication system according to one embodiment. The radio communication system 1 (which may be simply referred to as system 1) may be a system implementing a communication using Long Term Evolution (LTE), 5th generation mobile communication system New Radio (5G NR) and so on the specifications of which have been drafted by Third Generation Partnership Project (3GPP).

The radio communication system 1 may support dual connectivity (multi-RAT dual connectivity (MR-DC)) between a plurality of Radio Access Technologies (RATs). The MR-DC may include dual connectivity (E-UTRA-NR Dual Connectivity (EN-DC)) between LTE (Evolved Universal Terrestrial Radio Access (E-UTRA)) and NR, dual connectivity (NR-E-UTRA Dual Connectivity (NE-DC)) between NR and LTE, and so on.

In EN-DC, a base station (eNB) of LTE (E-UTRA) is a master node (MN), and a base station (gNB) of NR is a secondary node (SN). In NE-DC, a base station (gNB) of NR is an MN, and a base station (eNB) of LTE (E-UTRA) is an SN.

The radio communication system 1 may support dual connectivity between a plurality of base stations in the same RAT (for example, dual connectivity (NR-NR Dual Connectivity (NN-DC)) where both of an MN and an SN are base stations (gNB) of NR).

The radio communication system 1 may include a base station 11 that forms a macro cell C1 of a relatively wide coverage, and base stations 12 (12a to 12c) that form small cells C2, which are placed within the macro cell C1 and which are narrower than the macro cell C1. The user terminal 20 may be located in at least one cell. The arrangement, the number, and the like of each cell and user terminal 20 are by no means limited to the aspect shown in the diagram. Hereinafter, the base stations 11 and 12 will be collectively referred to as "base stations 10," unless specified otherwise.

The user terminal 20 may be connected to at least one of the plurality of base stations 10. The user terminal 20 may use at least one of carrier aggregation (CA) and dual connectivity (DC) using a plurality of component carriers (CCs).

Each CC may be included in at least one of a first frequency band (Frequency Range 1 (FR1)) and a second frequency band (Frequency Range 2 (FR2)). The macro cell C1 may be included in FR1, and the small cells C2 may be included in FR2. For example, FR1 may be a frequency band of 6 GHz or less (sub-6 GHz), and FR2 may be a frequency band which is higher than 24 GHz (above-24 GHz). Note that frequency bands, definitions and so on of FR1 and FR2 are by no means limited to these, and for example, FR1 may correspond to a frequency band which is higher than FR2.

The user terminal 20 may communicate using at least one of time division duplex (TDD) and frequency division duplex (FDD) in each CC.

The plurality of base stations 10 may be connected by a wired connection (for example, optical fiber in compliance with the Common Public Radio Interface (CPRI), the X2 interface and so on) or a wireless connection (for example, an NR communication). For example, if an NR communication is used as a backhaul between the base stations 11 and 12, the base station 11 corresponding to a higher station may be referred to as an "Integrated Access Backhaul (IAB) donor," and the base station 12 corresponding to a relay station (relay) may be referred to as an "IAB node."

The base station 10 may be connected to a core network 30 through another base station 10 or directly. For example, the core network 30 may include at least one of Evolved Packet Core (EPC), 5G Core Network (5GCN), Next Generation Core (NGC), and the like.

The core network 30 may include network functions (NF), such as a User Plane Function (UPF), an Access and Mobility management Function (AMF), a Session Management Function (SMF), Unified Data Management (UDM), an Application Function (AF), a Data Network (DN), a Location Management Function (LMF), and operation, administration, and maintenance (Management) (OAM). Note that a plurality of functions may be provided by one network node. Communication with an external network (for example, the Internet) may be performed via the DN.

The user terminal 20 may be a terminal supporting at least one of communication schemes such as LTE, LTE-A, 5G, and so on.

In the radio communication system 1, an orthogonal frequency division multiplexing (OFDM)-based wireless access scheme may be used. For example, in at least one of the downlink (DL) and the uplink (UL), Cyclic Prefix OFDM (CP-OFDM), Discrete Fourier Transform Spread OFDM (DFT-s-OFDM), Orthogonal Frequency Division Multiple Access (OFDMA), Single Carrier Frequency Division Multiple Access (SC-FDMA), and so on may be used.

The wireless access scheme may be referred to as a "waveform." Note that, in the radio communication system 1, another wireless access scheme (for example, another single carrier transmission scheme, another multi-carrier transmission scheme) may be used for a wireless access scheme in the UL and the DL.

In the radio communication system 1, a downlink shared channel (Physical Downlink Shared Channel (PDSCH)), which is used by each user terminal 20 on a shared basis, a broadcast channel (Physical Broadcast Channel (PBCH)), a downlink control channel (Physical Downlink Control Channel (PDCCH)) and so on, may be used as downlink channels.

In the radio communication system 1, an uplink shared channel (Physical Uplink Shared Channel (PUSCH)), which is used by each user terminal 20 on a shared basis, an uplink control channel (Physical Uplink Control Channel (PUCCH)), a random access channel (Physical Random Access Channel (PRACH)) and so on may be used as uplink channels.

User data, higher layer control information, System Information Blocks (SIBs) and so on are communicated on the PDSCH. User data, higher layer control information and so on may be communicated on the PUSCH. The Master Information Blocks (MIBs) may be communicated on the PBCH.

Lower layer control information may be communicated on the PDCCH. For example, the lower layer control information may include downlink control information (DCI) including scheduling information of at least one of the PDSCH and the PUSCH.

Note that DCI for scheduling the PDSCH may be referred to as "DL assignment," "DL DCI," and so on, and DCI for scheduling the PUSCH may be referred to as "UL grant," "UL DCI," and so on. Note that the PDSCH may be interpreted as "DL data", and the PUSCH may be interpreted as "UL data".

For detection of the PDCCH, a control resource set (CORESET) and a search space may be used. The CORESET corresponds to a resource to search DCI. The search space corresponds to a search area and a search method of PDCCH candidates. One CORESET may be associated with one or more search spaces. The UE may monitor a CORESET associated with a certain search space, based on search space configuration.

One search space may correspond to a PDCCH candidate corresponding to one or more aggregation levels.

One or more search spaces may be referred to as a "search space set." Note that a "search space," a "search space set," a "search space configuration," a "search space set configuration," a "CORESET," a "CORESET configuration" and so on of the present disclosure may be interchangeably interpreted.

Uplink control information (UCI) including at least one of channel state information (CSI), transmission confirmation information (for example, which may be referred to as Hybrid Automatic Repeat reQuest ACKnowledgement (HARQ-ACK), ACK/NACK, and so on), and scheduling request (SR) may be communicated by means of the PUCCH. By means of the PRACH, random access preambles for establishing connections with cells may be communicated.

Note that the downlink, the uplink, and so on in the present disclosure may be expressed without a term of "link." In addition, various channels may be expressed without adding "Physical" to the head.

In the radio communication system 1, a synchronization signal (SS), a downlink reference signal (DL-RS), and so on may be communicated. In the radio communication system 1, a cell-specific reference signal (CRS), a channel state information-reference signal (CSI-RS), a demodulation reference signal (DMRS), a positioning reference signal (PRS), a phase tracking reference signal (PTRS), and so on may be communicated as the DL-RS.

For example, the synchronization signal may be at least one of a primary synchronization signal (PSS) and a secondary synchronization signal (SSS). A signal block including an SS (PSS, SSS) and a PBCH (and a DMRS for a PBCH) may be referred to as an "SS/PBCH block," an "SS Block (SSB)," and so on. Note that an SS, an SSB, and so on may be referred to as a "reference signal."

In the radio communication system 1, a sounding reference signal (SRS), a demodulation reference signal (DMRS), and so on may be communicated as an uplink reference signal (UL-RS). Note that DMRS may be referred to as a "user terminal specific reference signal (UE-specific Reference Signal)."

(Base Station)

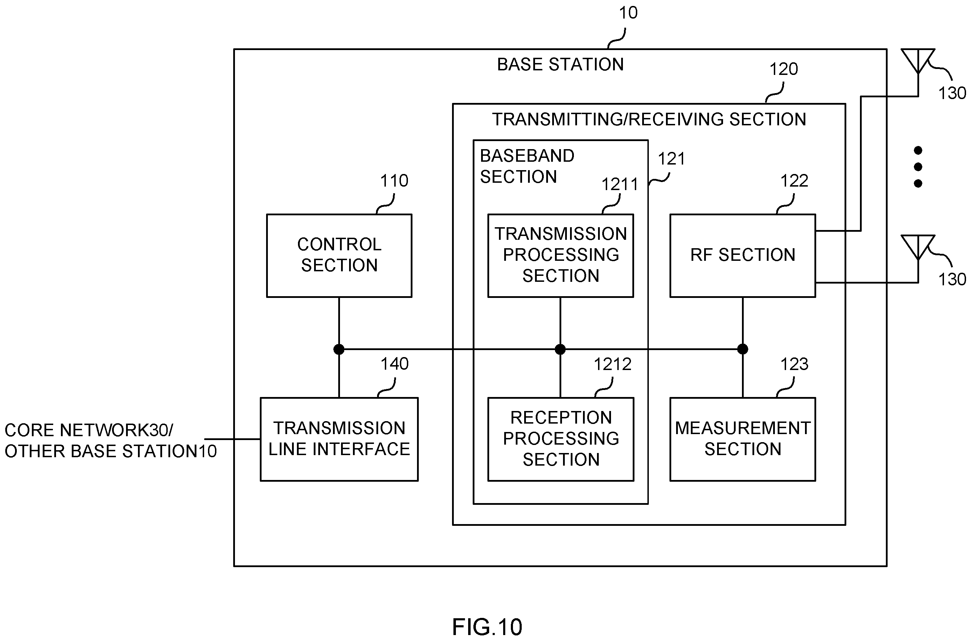

FIG. 10 is a diagram to show an example of a structure of the base station according to one embodiment. The base station 10 includes a control section 110, a transmitting/receiving section 120, transmitting/receiving antennas 130 and a communication path interface (transmission line interface) 140. Note that the base station 10 may include one or more control sections 110, one or more transmitting/receiving sections 120, one or more transmitting/receiving antennas 130, and one or more communication path interfaces 140.

Note that, the present example primarily shows functional blocks that pertain to characteristic parts of the present embodiment, and it is assumed that the base station 10 may include other functional blocks that are necessary for radio communication as well. Part of the processes of each section described below may be omitted.

The control section 110 controls the whole of the base station 10. The control section 110 can be constituted with a controller, a control circuit, or the like described based on general understanding of the technical field to which the present disclosure pertains.

The control section 110 may control generation of signals, scheduling (for example, resource allocation, mapping), and so on. The control section 110 may control transmission and reception, measurement and so on using the transmitting/receiving section 120, the transmitting/receiving antennas 130, and the communication path interface 140. The control section 110 may generate data, control information, a sequence and so on to transmit as a signal, and forward the generated items to the transmitting/receiving section 120. The control section 110 may perform call processing (setting up, releasing) for communication channels, manage the state of the base station 10, and manage the radio resources.

The transmitting/receiving section 120 may include a baseband section 121, a Radio Frequency (RF) section 122, and a measurement section 123. The baseband section 121 may include a transmission processing section 1211 and a reception processing section 1212. The transmitting/receiving section 120 can be constituted with a transmitter/receiver, an RF circuit, a baseband circuit, a filter, a phase shifter, a measurement circuit, a transmitting/receiving circuit, or the like described based on general understanding of the technical field to which the present disclosure pertains.

The transmitting/receiving section 120 may be structured as a transmitting/receiving section in one entity, or may be constituted with a transmitting section and a receiving section. The transmitting section may be constituted with the transmission processing section 1211, and the RF section 122. The receiving section may be constituted with the reception processing section 1212, the RF section 122, and the measurement section 123.

The transmitting/receiving antennas 130 can be constituted with antennas, for example, an array antenna, or the like described based on general understanding of the technical field to which the present disclosure pertains.

The transmitting/receiving section 120 may transmit the above-described downlink channel, synchronization signal, downlink reference signal, and so on. The transmitting/receiving section 120 may receive the above-described uplink channel, uplink reference signal, and so on.

The transmitting/receiving section 120 may form at least one of a transmit beam and a receive beam by using digital beam forming (for example, precoding), analog beam forming (for example, phase rotation), and so on.

The transmitting/receiving section 120 (transmission processing section 1211) may perform the processing of the Packet Data Convergence Protocol (PDCP) layer, the processing of the Radio Link Control (RLC) layer (for example, RLC retransmission control), the processing of the Medium Access Control (MAC) layer (for example, HARQ retransmission control), and so on, for example, on data and control information and so on acquired from the control section 110, and may generate bit string to transmit.

The transmitting/receiving section 120 (transmission processing section 1211) may perform transmission processing such as channel coding (which may include error correction coding), modulation, mapping, filtering, discrete Fourier transform (DFT) processing (as necessary), inverse fast Fourier transform (IFFT) processing, precoding, digital-to-analog conversion, and so on, on the bit string to transmit, and output a baseband signal.

The transmitting/receiving section 120 (RF section 122) may perform modulation to a radio frequency band, filtering, amplification, and so on, on the baseband signal, and transmit the signal of the radio frequency band through the transmitting/receiving antennas 130.

On the other hand, the transmitting/receiving section 120 (RF section 122) may perform amplification, filtering, demodulation to a baseband signal, and so on, on the signal of the radio frequency band received by the transmitting/receiving antennas 130.

The transmitting/receiving section 120 (reception processing section 1212) may apply reception processing such as analog-digital conversion, fast Fourier transform (FFT) processing, inverse discrete Fourier transform (IDFT) processing (as necessary), filtering, de-mapping, demodulation, decoding (which may include error correction decoding), MAC layer processing, the processing of the RLC layer and the processing of the PDCP layer, and so on, on the acquired baseband signal, and acquire user data, and so on.

The transmitting/receiving section 120 (measurement section 123) may perform the measurement related to the received signal. For example, the measurement section 123 may perform Radio Resource Management (RRM) measurement, Channel State Information (CSI) measurement, and so on, based on the received signal. The measurement section 123 may measure a received power (for example, Reference Signal Received Power (RSRP)), a received quality (for example, Reference Signal Received Quality (RSRQ), a Signal to Interference plus Noise Ratio (SINR), a Signal to Noise Ratio (SNR)), a signal strength (for example, Received Signal Strength Indicator (RSSI)), channel information (for example, CSI), and so on. The measurement results may be output to the control section 110.

The communication path interface 140 may perform transmission/reception (backhaul signaling) of a signal with an apparatus included in the core network 30 (for example, a network node providing NF) or other base stations 10, and so on, and acquire or transmit user data (user plane data), control plane data, and so on for the user terminal 20.

Note that the transmitting section and the receiving section of the base station 10 in the present disclosure may be constituted with at least one of the transmitting/receiving section 120, the transmitting/receiving antennas 130, and the communication path interface 140.

The transmitting/receiving section 120 may transmit a downlink control channel (PDCCH) order for triggering random access channel (PRACH) transmission. The control section 110 may control reception of the PRACH transmission taking account of at least one of a first parameter for synchronization signal block (SSB)-based time and frequency tracking and a second parameter for radio frequency (RF) and base band (BB) preparation, for a time gap between PDCCH order reception and the PRACH transmission.

(User Terminal)

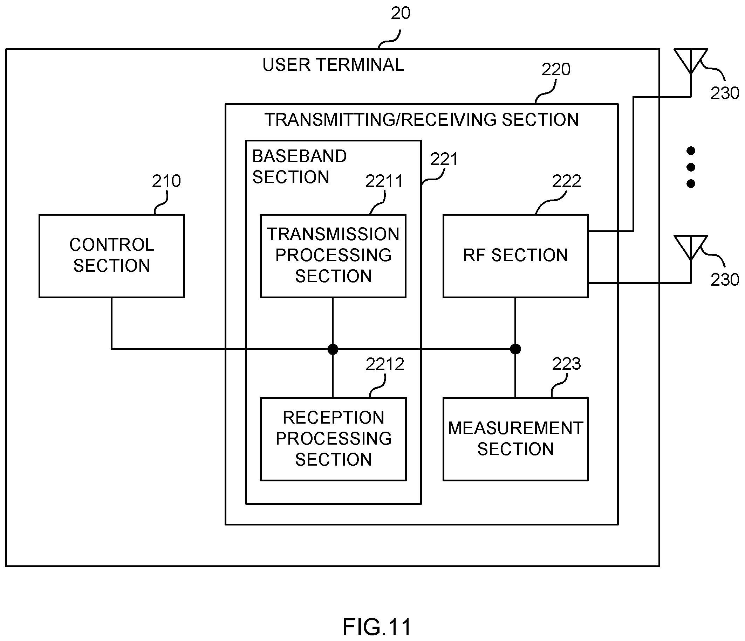

FIG. 11 is a diagram to show an example of a structure of the user terminal according to one embodiment. The user terminal 20 includes a control section 210, a transmitting/receiving section 220, and transmitting/receiving antennas 230. Note that the user terminal 20 may include one or more control sections 210, one or more transmitting/receiving sections 220, and one or more transmitting/receiving antennas 230.

Note that, the present example primarily shows functional blocks that pertain to characteristic parts of the present embodiment, and it is assumed that the user terminal 20 may include other functional blocks that are necessary for radio communication as well. Part of the processes of each section described below may be omitted.

The control section 210 controls the whole of the user terminal 20. The control section 210 can be constituted with a controller, a control circuit, or the like described based on general understanding of the technical field to which the present disclosure pertains.

The control section 210 may control generation of signals, mapping, and so on. The control section 210 may control transmission/reception, measurement and so on using the transmitting/receiving section 220, and the transmitting/receiving antennas 230. The control section 210 generates data, control information, a sequence and so on to transmit as a signal, and may forward the generated items to the transmitting/receiving section 220.

The transmitting/receiving section 220 may include a baseband section 221, an RF section 222, and a measurement section 223. The baseband section 221 may include a transmission processing section 2211 and a reception processing section 2212. The transmitting/receiving section 220 can be constituted with a transmitter/receiver, an RF circuit, a baseband circuit, a filter, a phase shifter, a measurement circuit, a transmitting/receiving circuit, or the like described based on general understanding of the technical field to which the present disclosure pertains.

The transmitting/receiving section 220 may be structured as a transmitting/receiving section in one entity, or may be constituted with a transmitting section and a receiving section. The transmitting section may be constituted with the transmission processing section 2211, and the RF section 222. The receiving section may be constituted with the reception processing section 2212, the RF section 222, and the measurement section 223.

The transmitting/receiving antennas 230 can be constituted with antennas, for example, an array antenna, or the like described based on general understanding of the technical field to which the present disclosure pertains.

The transmitting/receiving section 220 may receive the above-described downlink channel, synchronization signal, downlink reference signal, and so on. The transmitting/receiving section 220 may transmit the above-described uplink channel, uplink reference signal, and so on.

The transmitting/receiving section 220 may form at least one of a transmit beam and a receive beam by using digital beam forming (for example, precoding), analog beam forming (for example, phase rotation), and so on.

The transmitting/receiving section 220 (transmission processing section 2211) may perform the processing of the PDCP layer, the processing of the RLC layer (for example, RLC retransmission control), the processing of the MAC layer (for example, HARQ retransmission control), and so on, for example, on data and control information and so on acquired from the control section 210, and may generate bit string to transmit.

The transmitting/receiving section 220 (transmission processing section 2211) may perform transmission processing such as channel coding (which may include error correction coding), modulation, mapping, filtering, DFT processing (as necessary), IFFT processing, precoding, digital-to-analog conversion, and so on, on the bit string to transmit, and output a baseband signal.

Note that, whether to apply DFT processing or not may be based on the configuration of the transform precoding. The transmitting/receiving section 220 (transmission processing section 2211) may perform, for a certain channel (for example, PUSCH), the DFT processing as the above-described transmission processing to transmit the channel by using a DFT-s-OFDM waveform if transform precoding is enabled, and otherwise, does not need to perform the DFT processing as the above-described transmission processing.

The transmitting/receiving section 220 (RF section 222) may perform modulation to a radio frequency band, filtering, amplification, and so on, on the baseband signal, and transmit the signal of the radio frequency band through the transmitting/receiving antennas 230.

On the other hand, the transmitting/receiving section 220 (RF section 222) may perform amplification, filtering, demodulation to a baseband signal, and so on, on the signal of the radio frequency band received by the transmitting/receiving antennas 230.

The transmitting/receiving section 220 (reception processing section 2212) may apply reception processing such as analog-digital conversion, FFT processing, IDFT processing (as necessary), filtering, de-mapping, demodulation, decoding (which may include error correction decoding), MAC layer processing, the processing of the RLC layer and the processing of the PDCP layer, and so on, on the acquired baseband signal, and acquire user data, and so on.

The transmitting/receiving section 220 (measurement section 223) may perform the measurement related to the received signal. For example, the measurement section 223 may perform RRM measurement, CSI measurement, and so on, based on the received signal. The measurement section 223 may measure a received power (for example, RSRP), a received quality (for example, RSRQ, SINR, SNR), a signal strength (for example, RSSI), channel information (for example, CSI), and so on. The measurement results may be output to the control section 210.

Note that the transmitting section and the receiving section of the user terminal 20 in the present disclosure may be constituted with at least one of the transmitting/receiving section 220 and the transmitting/receiving antennas 230.

The transmitting/receiving section 220 may perform random access channel (PRACH) transmission triggered by a downlink control channel (PDCCH) order. The control section 210 may control timing of the PRACH transmission by taking account of at least one of a first parameter for synchronization signal block (SSB)-based time and frequency tracking and a second parameter for radio frequency (RF) and base band (BB) preparation, for a time gap between PDCCH order reception and the PRACH transmission. The control section 210 may judge application of the first parameter, based on an SSB index indicated by the PDCCH order. The second parameter may be determined based on whether a PRACH bandwidth is included in an active uplink bandwidth part (UL BWP). The control section 210 may apply a transmission configuration indication (TCI) state switching delay requirement to the first parameter.

(Hardware Structure)

Note that the block diagrams that have been used to describe the above embodiments show blocks in functional units. These functional blocks (components) may be implemented in arbitrary combinations of at least one of hardware and software. Also, the method for implementing each functional block is not particularly limited. That is, each functional block may be realized by one piece of apparatus that is physically or logically coupled, or may be realized by directly or indirectly connecting two or more physically or logically separate apparatuses (for example, via wire, wireless, or the like) and using these apparatuses. The functional blocks may be implemented by combining software into the apparatus described above or the plurality of apparatuses described above.

Here, functions include judgment, determination, decision, calculation, computation, processing, derivation, investigation, search, confirmation, reception, transmission, output, access, resolution, selection, designation, establishment, comparison, assumption, expectation, considering, broadcasting, notifying, communicating, forwarding, configuring, reconfiguring, allocating (mapping), assigning, and the like, but functions are by no means limited to these. For example, a functional block (component) to implement a function of transmission may be referred to as a "transmitting section (transmitting unit)", a "transmitter", or the like. The method for implementing each component is not particularly limited as described above.

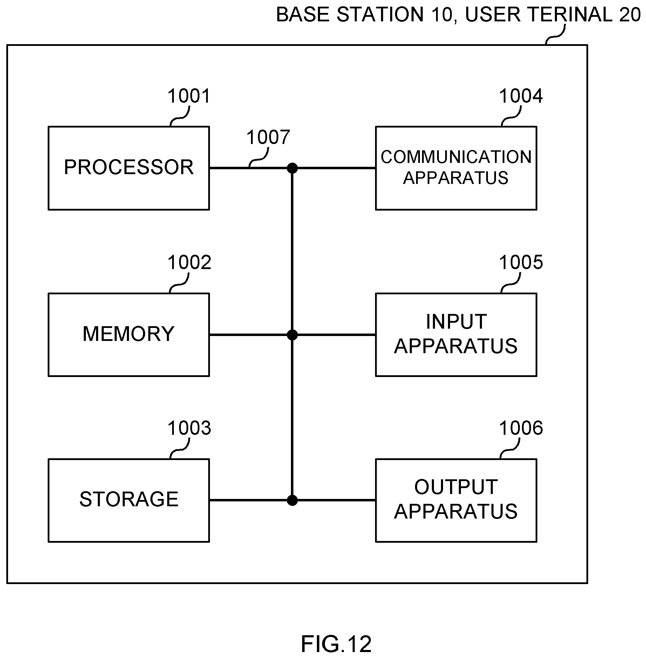

For example, a base station, a user terminal, and so on according to one embodiment of the present disclosure may function as a computer that executes the processes of the radio communication method of the present disclosure. FIG. 12 is a diagram to show an example of a hardware structure of the base station and the user terminal according to one embodiment. Physically, the above-described base station 10 and user terminal 20 may each be formed as a computer apparatus that includes a processor 1001, a memory 1002, a storage 1003, a communication apparatus 1004, an input apparatus 1005, an output apparatus 1006, a bus 1007, and so on.

Note that in the present disclosure, the words such as an apparatus, a circuit, a device, a section, a unit, and so on can be interchangeably used. The hardware structure of the base station 10 and the user terminal 20 may be configured to include one or more of apparatuses shown in the drawings, or may be configured not to include part of apparatuses.

For example, although one processor 1001 is shown in the drawings, a plurality of processors may be provided. Furthermore, processes may be implemented with one processor or may be implemented at the same time, in sequence, or in different manners with two or more processors. Note that the processor 1001 may be implemented with one or more chips.

Each function of the base station 10 and the user terminal 20 is implemented, for example, by allowing certain software (programs) to be read on hardware such as the processor 1001 and the memory 1002, and by allowing the processor 1001 to perform calculations to control communication via the communication apparatus 1004 and control at least one of reading and writing of data in the memory 1002 and the storage 1003.

The processor 1001 controls the whole computer by, for example, running an operating system. The processor 1001 may be configured with a central processing unit (CPU), which includes interfaces with peripheral apparatus, control apparatus, computing apparatus, a register, and so on. For example, at least a part of the control section 110 (210), the transmitting/receiving section 120 (220), and so on may be implemented by the processor 1001.

Furthermore, the processor 1001 reads programs (program codes), software modules, data, and so on from at least one of the storage 1003 and the communication apparatus 1004, into the memory 1002, and executes various processes according to these. As for the programs, programs to allow computers to execute at least a part of the operations explained in the above-described embodiments are used. For example, the control section 110 (210) may be implemented by control programs that are stored in the memory 1002 and that operate on the processor 1001, and other functional blocks may be implemented likewise.

The memory 1002 is a computer-readable recording medium, and may be constituted with, for example, at least one of a Read Only Memory (ROM), an Erasable Programmable ROM (EPROM), an Electrically EPROM (EEPROM), a Random Access Memory (RAM), and other appropriate storage media. The memory 1002 may be referred to as a "register", a "cache", a "main memory (primary storage apparatus)" and so on. The memory 1002 can store executable programs (program codes), software modules, and the like for implementing the radio communication method according to one embodiment of the present disclosure.

The storage 1003 is a computer-readable recording medium, and may be constituted with, for example, at least one of a flexible disk, a floppy (registered trademark) disk, a magneto-optical disk (for example, a compact disc (Compact Disc ROM (CD-ROM) and so on), a digital versatile disc, a Blu-ray (registered trademark) disk), a removable disk, a hard disk drive, a smart card, a flash memory device (for example, a card, a stick, and a key drive), a magnetic stripe, a database, a server, and other appropriate storage media. The storage 1003 may be referred to as "auxiliary storage apparatus".

The communication apparatus 1004 is hardware (transmitting/receiving device) for allowing inter-computer communication via at least one of wired and wireless networks, and may be referred to as, for example, a "network device", a "network controller", a "network card", a "communication module", and so on. The communication apparatus 1004 may be configured to include a high frequency switch, a duplexer, a filter, a frequency synthesizer, and so on in order to realize, for example, at least one of frequency division duplex (FDD) and time division duplex (TDD). For example, the transmitting/receiving section 120 (220), the transmitting/receiving antenna 130 (230), and so on may be implemented by the communication apparatus 1004. In the transmitting/receiving section 120 (220), the transmitting section 120a (220a) and the receiving section 120b (220b) can be implemented while being separated physically or logically.

The input apparatus 1005 is an input device that receives input from the outside (for example, a keyboard, a mouse, a microphone, a switch, a button, a sensor or the like). The output apparatus 1006 is an output device that allows sending output to the outside (for example, a display, a speaker, a Light Emitting Diode (LED) lamp or the like). Note that the input apparatus 1005 and the output apparatus 1006 may be provided in an integrated structure (for example, a touch panel).

Furthermore, these types of apparatus, including the processor 1001, the memory 1002, and others, are connected by a bus 1007 for communicating information. The bus 1007 may be formed with a single bus, or may be formed with buses that vary between apparatuses.

Also, the base station 10 and the user terminal 20 may be structured to include hardware such as a microprocessor, a Digital Signal Processor (DSP), an Application Specific Integrated Circuit (ASIC), a Programmable Logic Device (PLD), a Field Programmable Gate Array (FPGA), and so on, and a part or all of the functional blocks may be implemented by the hardware. For example, the processor 1001 may be implemented with at least one of these pieces of hardware.

(Variations)

It should be noted that a term used in the present disclosure and a term required for understanding of the present disclosure may be replaced by a term having the same or similar meaning. For example, a channel, a symbol, and a signal (or signaling) may be interchangeably used. Further, a signal may be a message. A reference signal may be abbreviated as an RS, and may be referred to as a pilot, a pilot signal or the like, depending on which standard applies. Furthermore, a component carrier (CC) may be referred to as a cell, a frequency carrier, a carrier frequency and so on.

A radio frame may be constituted of one or a plurality of periods (frames) in the time domain. Each of one or a plurality of periods (frames) constituting a radio frame may be referred to as a "subframe". Furthermore, a subframe may be constituted of one or a plurality of slots in the time domain. A subframe may be a fixed time length (for example, 1 ms) independent of numerology.

Here, numerology may be a communication parameter applied to at least one of transmission and reception of a certain signal or channel. For example, numerology may indicate at least one of a subcarrier spacing (SCS), a bandwidth, a symbol length, a cyclic prefix length, a transmission time interval (TTI), the number of symbols per TTI, a radio frame structure, a specific filter processing performed by a transceiver in the frequency domain, a specific windowing processing performed by a transceiver in the time domain, and so on.

A slot may be constituted of one or a plurality of symbols in the time domain (Orthogonal Frequency Division Multiplexing (OFDM) symbols, Single Carrier Frequency Division Multiple Access (SC-FDMA) symbols, and so on). Furthermore, a slot may be a time unit based on numerology.

A slot may include a plurality of mini-slots. Each mini-slot may be constituted of one or a plurality of symbols in the time domain. A mini-slot may be referred to as a "sub-slot". A mini-slot may be constituted of symbols in number less than the slot. A PDSCH (or PUSCH) transmitted in a time unit larger than a mini-slot may be referred to as "PDSCH (PUSCH) mapping type A". A PDSCH (or PUSCH) transmitted using a mini-slot may be referred to as "PDSCH (PUSCH) mapping type B".

A radio frame, a subframe, a slot, a mini-slot, and a symbol all express time units in signal communication. A radio frame, a subframe, a slot, a mini-slot, and a symbol may each be called by other applicable terms. Note that time units such as a frame, a subframe, a slot, mini-slot, and a symbol in the present disclosure may be interchangeably used.

For example, one subframe may be referred to as a "TTI", a plurality of consecutive subframes may be referred to as a "TTI", or one slot or one mini-slot may be referred to as a "TTI". In other words, at least one of a subframe and a TTI may be a subframe (1 ms) in existing LTE, may be a period shorter than 1 ms (for example, 1 to 13 symbols), or may be a period longer than 1 ms. Note that a unit expressing TTI may be referred to as a "slot", a "mini-slot", or the like, instead of a "subframe".

Here, a TTI refers to the minimum time unit of scheduling in radio communication, for example. For example, in LTE systems, a base station performs, for user terminals, scheduling of allocating of radio resources (such as a frequency bandwidth and transmit power that are available for each user terminal) in TTI units. Note that the definition of TTIs is not limited to this.

The TTI may be a transmission time unit for channel-encoded data packets (transport blocks), code blocks, codewords, or the like, or may be a unit of processing in scheduling, link adaptation, or the like. Note that, when a TTI is given, a time interval (for example, the number of symbols) to which transport blocks, code blocks, codewords, or the like are actually mapped may be shorter than the TTI.

Note that, in the case where one slot or one mini-slot is referred to as a TTI, one or more TTIs (that is, one or more slots or one or more mini-slots) may be the minimum time unit of scheduling. Furthermore, the number of slots (the number of mini-slots) constituting the minimum time unit of the scheduling may be controlled.

A TTI having a time length of 1 ms may be referred to as a "normal TTI" (TTI in 3GPP Rel. 8 to Rel. 12), a "long TTI", a "normal subframe", a "long subframe", a "slot" and so on. A TTI that is shorter than a normal TTI may be referred to as a "shortened TTI", a "short TTI", a "partial or fractional TTI", a "shortened subframe", a "short subframe", a "mini-slot", a "sub-slot", a "slot" and so on.

Note that a long TTI (for example, a normal TTI, a subframe, and so on) may be interpreted as a TTI having a time length exceeding 1 ms, and a short TTI (for example, a shortened TTI and so on) may be interpreted as a TTI having a TTI length shorter than the TTI length of a long TTI and equal to or longer than 1 ms.

A resource block (RB) is the unit of resource allocation in the time domain and the frequency domain, and may include one or a plurality of consecutive subcarriers in the frequency domain. The number of subcarriers included in an RB may be the same regardless of numerology, and, for example, may be 12. The number of subcarriers included in an RB may be determined based on numerology.

Also, an RB may include one or a plurality of symbols in the time domain, and may be one slot, one mini-slot, one subframe, or one TTI in length. One TTI, one subframe, and so on each may be constituted of one or a plurality of resource blocks.

Note that one or a plurality of RBs may be referred to as a "physical resource block (Physical RB (PRB))", a "sub-carrier group (SCG)", a "resource element group (REG)", a "PRB pair", an "RB pair" and so on.

Furthermore, a resource block may be constituted of one or a plurality of resource elements (REs). For example, one RE may correspond to a radio resource field of one subcarrier and one symbol.

A bandwidth part (BWP) (which may be referred to as a "fractional bandwidth", and so on) may represent a subset of contiguous common resource blocks (common RBs) for certain numerology in a certain carrier. Here, a common RB may be specified by an index of the RB based on the common reference point of the carrier. A PRB may be defined by a certain BWP and may be numbered in the BWP.

The BWP may include a UL BWP (BWP for UL) and a DL BWP (BWP for DL). One or a plurality of BWPs may be configured in one carrier for a UE.

At least one of configured BWPs may be active, and a UE may not need to assume to transmit/receive a certain signal/channel outside the active BWP(s). Note that a "cell", a "carrier", and so on in the present disclosure may be used interchangeably with a "BWP".

Note that the above-described structures of radio frames, subframes, slots, mini-slots, symbols, and so on are merely examples. For example, structures such as the number of subframes included in a radio frame, the number of slots per subframe or radio frame, the number of mini-slots included in a slot, the numbers of symbols and RBs included in a slot or a mini-slot, the number of subcarriers included in an RB, the number of symbols in a TTI, the symbol length, the cyclic prefix (CP) length, and so on can be variously changed.

Further, the information, parameters, and so on described in the present disclosure may be expressed using absolute values or relative values with respect to certain values, or may be expressed using another corresponding information. For example, a radio resource may be specified by a certain index.

The names used for parameters and so on in the present disclosure are in no respect used as limitations. Furthermore, mathematical expressions that use these parameters, and so on may be different from those explicitly disclosed in the present disclosure. Since various channels (PUCCH, PDCCH, and so on) and information elements may be identified by any suitable names, the various names allocated to these various channels and information elements are in no respect used as limitations.

The information, signals, and so on described in the present disclosure may be represented by using any of a variety of different technologies. For example, data, an instruction, a command, information, a signal, a bit, a symbol, a chip, and so on, described throughout the description of the present application, may be represented by a voltage, an electric current, electromagnetic waves, magnetic fields, a magnetic particle, optical fields, a photon, or any combination thereof.

Also, information, signals, and so on can be output at least one of from a higher layer to a lower layer and from a lower layer to a higher layer. Information, signals, and so on may be input and/or output via a plurality of network nodes.

The information, signals, and so on that are input and/or output may be stored in a specific location (for example, a memory) or may be managed by using a management table. The information, signals, and so on to be input and/or output can be overwritten, updated, or added. The information, signals, and so on that has been output may be deleted. The information, signals, and so on that has been input may be transmitted to another apparatus.

Notification of information is by no means limited to the aspects/embodiments described in the present disclosure, and other methods may be used as well. For example, notification of information in the present disclosure may be implemented by using physical layer signaling (for example, downlink control information (DCI), uplink control information (UCI)), higher layer signaling (for example, Radio Resource Control (RRC) signaling, broadcast information (master information block (MIB), system information block (SIB), and so on), Medium Access Control (MAC) signaling and so on), and other signals or combinations of these.

Note that physical layer signaling may be referred to as "Layer 1/Layer 2 (L1/L2) control information (L1/L2 control signals)", "L1 control information (L1 control signal)", and so on. Also, RRC signaling may be referred to as an "RRC message", and can be, for example, an RRC connection setup message, an RRC connection reconfiguration message, and so on. Also, MAC signaling may be notified using, for example, MAC control elements (MAC CEs).

Also, notification of certain information (for example, notification of "X") does not necessarily have to be performed explicitly, and can be performed implicitly (by, for example, not reporting this certain information or reporting another piece of information).

A decision may be realized by a value (0 or 1) represented by one bit, by a boolean value (true or false), or by comparison of numerical values (e.g., comparison with a certain value).

Software, irrespective of whether referred to as "software", "firmware", "middleware", "microcode", or "hardware description language", or called by other terms, should be interpreted broadly to mean instructions, instruction sets, codes, code segments, program codes, programs, subprograms, software modules, applications, software applications, software packages, routines, subroutines, objects, executable files, execution threads, procedures, functions, and the like.

Also, software, instructions, information, and the like may be transmitted and received via a transmission medium. For example, when software is transmitted from a website, a server, or other remote sources by using at least one of wired technologies (coaxial cable, fiber optic cable, twisted-pair cable, digital subscriber line (DSL), and so on) and wireless technologies (infrared radiation, microwaves, and so on), at least one of these wired technologies and wireless technologies is also included in the definition of the transmission medium.

The terms "system" and "network" used in the present disclosure may be used interchangeably. The "network" may mean an apparatus (for example, a base station) included in the network.

In the present disclosure, the terms such as "precoding", a "precoder", a "weight (precoding weight)", "quasi-co-location (QCL)", a "Transmission Configuration Indication state (TCI state)", a "spatial relation", a "spatial domain filter", a "transmit power", "phase rotation", an "antenna port", an "antenna port group", a "layer", "the number of layers", a "rank", a "resource", a "resource set", a "resource group", a "beam", a "beam width", a "beam angular degree", an "antenna", an "antenna element", a "panel", and so on may be used interchangeably.

In the present disclosure, the terms such as a "base station (BS)", a "radio base station", a "fixed station," a "NodeB", an "eNB (eNodeB)", a "gNB (gNodeB)", an "access point", a "transmission point (TP)", a "reception point (RP)", a "transmission/reception point (TRP)", a "panel", a "cell", a "sector", a "cell group", a "carrier", a "component carrier", and so on can be used interchangeably. The base station may be referred to as the terms such as a "macro cell", a "small cell", a "femto cell", a "pico cell", and so on.

A base station can accommodate one or a plurality of (for example, three) cells. When a base station accommodates a plurality of cells, the entire coverage area of the base station can be partitioned into multiple smaller areas, and each smaller area can provide communication services through base station subsystems (for example, indoor small base stations (Remote Radio Heads (RRHs))). The term "cell" or "sector" refers to part of or the entire coverage area of at least one of a base station and a base station subsystem that provides communication services within this coverage.

In the present disclosure, transmitting information to the terminal by the base station may be interchangeably interpreted as instructing the terminal to perform control/operation based on the information by the base station.

In the present disclosure, the terms "mobile station (MS)", "user terminal", "user equipment (UE)", and "terminal" may be used interchangeably.

A mobile station may be referred to as a "subscriber station", "mobile unit", "subscriber unit", "wireless unit", "remote unit", "mobile device", "wireless device", "wireless communication device", "remote device", "mobile subscriber station", "access terminal", "mobile terminal", "wireless terminal", "remote terminal", "handset", "user agent", "mobile client", "client", or some other appropriate terms in some cases.

At least one of a base station and a mobile station may be referred to as a "transmitting apparatus", a "receiving apparatus", a "radio communication apparatus" or the like. Note that at least one of a base station and a mobile station may be a device mounted on a moving object or a moving object itself, and so on.

The moving object is a movable object with any moving speed, and naturally, it also includes a moving object stopped. Examples of the moving object include a vehicle, a transport vehicle, an automobile, a motorcycle, a bicycle, a connected car, a loading shovel, a bulldozer, a wheel loader, a dump truck, a fork lift, a train, a bus, a trolley, a rickshaw, a ship and other watercraft, an airplane, a rocket, a satellite, a drone, a multicopter, a quadcopter, a balloon, and an object mounted on any of these, but these are not restrictive. The moving object may be a moving object that autonomously travels based on a direction for moving.

The moving object may be a vehicle (for example, a car, an airplane, and the like), may be a moving object which moves unmanned (for example, a drone, an automatic operation car, and the like), or may be a robot (a manned type or unmanned type). Note that at least one of a base station and a mobile station also includes an apparatus which does not necessarily move during communication operation. For example, at least one of a base station and a mobile station may be an Internet of Things (IoT) device such as a sensor.

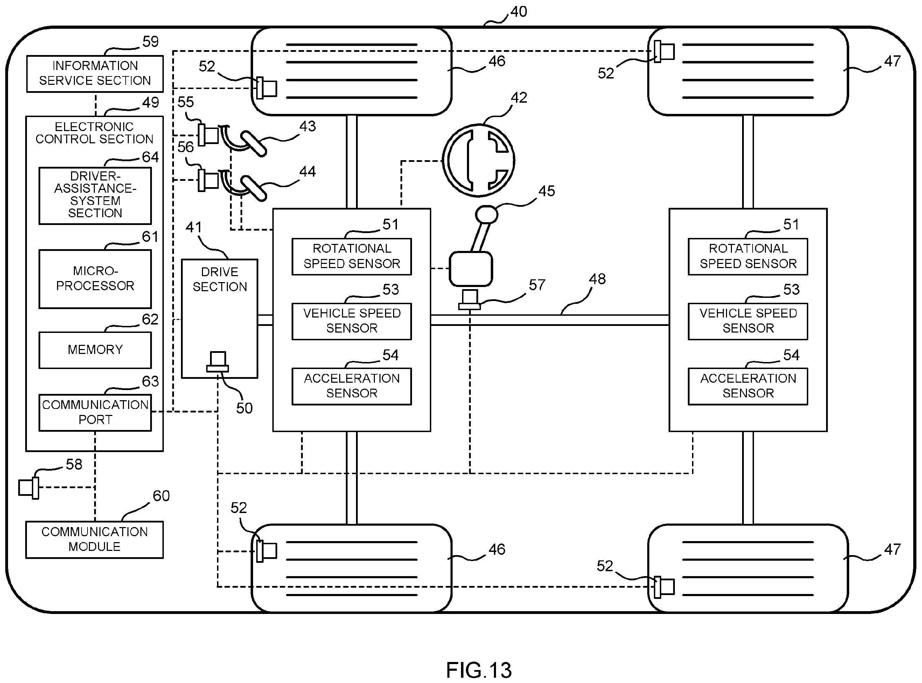

FIG. 13 is a diagram to show an example of a vehicle according to one embodiment. A vehicle 40 includes a driving section 41, a steering section 42, an accelerator pedal 43, a brake pedal 44, a shift lever 45, right and left front wheels 46, right and left rear wheels 47, an axle 48, an electronic control section 49, various sensors (including a current sensor 50, a rotational speed sensor 51, a pneumatic sensor 52, a vehicle speed sensor 53, an acceleration sensor 54, an accelerator pedal sensor 55, a brake pedal sensor 56, a shift lever sensor 57, and an object detection sensor 58), an information service section 59, and a communication module 60.

The driving section 41 includes, for example, at least one of an engine, a motor, and a hybrid of an engine and a motor. The steering section 42 includes at least a steering wheel (also referred to as a handle), and is configured to steer at least one of the front wheels 46 and the rear wheels 47, based on operation of the steering wheel operated by a user.

The electronic control section 49 includes a microprocessor 61, a memory (ROM, RAM) 62, and a communication port (for example, an input/output (IO) port) 63. The electronic control section 49 receives, as input, signals from the various sensors 50 to 58 provided in the vehicle. The electronic control section 49 may be referred to as an Electronic Control Unit (ECU).

Examples of the signals from the various sensors 50 to 58 include a current signal from the current sensor 50 for sensing current of a motor, a rotational speed signal of the front wheels 46/rear wheels 47 acquired by the rotational speed sensor 51, a pneumatic signal of the front wheels 46/rear wheels 47 acquired by the pneumatic sensor 52, a vehicle speed signal acquired by the vehicle speed sensor 53, an acceleration signal acquired by the acceleration sensor 54, a depressing amount signal of the accelerator pedal 43 acquired by the accelerator pedal sensor 55, a depressing amount signal of the brake pedal 44 acquired by the brake pedal sensor 56, an operation signal of the shift lever 45 acquired by the shift lever sensor 57, and a detection signal for detecting an obstruction, a vehicle, a pedestrian, and the like acquired by the object detection sensor 58.

The information service section 59 includes: various devices for providing (outputting) various pieces of information such as driving information, traffic information, and entertainment information, such as a car navigation system, an audio system, a speaker, a display, a television, and a radio; and one or more ECUs that control these devices. The information service section 59 provides various pieces of information/services (for example, multimedia information/multimedia service) to an occupant of the vehicle 40, using information acquired from an external apparatus via the communication module 60 and the like.

The information service section 59 may include an input device (for example, a keyboard, a mouse, a microphone, a switch, a button, a sensor, a touch panel, and the like) for receiving input from the outside, or may include an output device (for example, a display, a speaker, an LED lamp, a touch panel, and the like) for implementing output to the outside.

A driving assistance system section 64 includes: various devices for providing functions for preventing an accident and reducing a driver's driving load, such as a millimeter wave radar, Light Detection and Ranging (LiDAR), a camera, a positioning locator (for example, a Global Navigation Satellite System (GNSS) and the like), map information (for example, a high definition (HD) map, an autonomous vehicle (AV) map, and the like), a gyro system (for example, an inertial measurement apparatus (inertial measurement unit (IMU)), an inertial navigation apparatus (inertial navigation system (INS)), and the like), an artificial intelligence (AI) chip, and an AI processor; and one or more ECUs that control these devices. The driving assistance system section 64 transmits and receives various pieces of information via the communication module 60, and implements a driving assistance function or an autonomous driving function.

The communication module 60 can communicate with the microprocessor 61 and the constituent elements of the vehicle 40 via the communication port 63. For example, the communication module 60 transmits and receives data (information), via the communication port 63, to and from the driving section 41, the steering section 42, the accelerator pedal 43, the brake pedal 44, the shift lever 45, the right and left front wheels 46, the right and left rear wheels 47, the axle 48, the microprocessor 61 and the memory (ROM, RAM) 62 in the electronic control section 49, and the various sensors 50 to 58, which are included in the vehicle 40.

The communication module 60 is a communication device that can be controlled by the microprocessor 61 of the electronic control section 49 and that can perform communication with an external apparatus. For example, the communication module 60 performs transmission and reception of various pieces of information to and from the external apparatus via radio communication. The communication module 60 may be either inside or outside the electronic control section 49. The external apparatus may be, for example, the base station 10, the user terminal 20, or the like described above. The communication module 60 may be, for example, at least one of the base station 10 and the user terminal 20 described above (may function as at least one of the base station 10 and the user terminal 20).

The communication module 60 may transmit at least one of signals input from the various sensors 50 to 58 to the electronic control section 49, information obtained based on the signals, and information based on an input from the outside (a user) obtained via the information service section 59, to the external apparatus via radio communication. The electronic control section 49, the various sensors 50 to 58, the information service section 59, and the like may be referred to as input sections that receive input. For example, the PUSCH transmitted by the communication module 60 may include information based on the input.

The communication module 60 receives various pieces of information (traffic information, signal information, inter-vehicle distance information, and the like) transmitted from the external apparatus, and displays the received information on the information service section 59 included in the vehicle. The information service section 59 may be referred to as an output section that outputs information (for example, outputs information to devices, such as a display and a speaker, based on the PDSCH received by the communication module 60 (or data/information decoded from the PDSCH)).

The communication module 60 stores the various pieces of information received from the external apparatus in the memory 62 that can be used by the microprocessor 61. Based on the pieces of information stored in the memory 62, the microprocessor 61 may control the driving section 41, the steering section 42, the accelerator pedal 43, the brake pedal 44, the shift lever 45, the right and left front wheels 46, the right and left rear wheels 47, the axle 48, the various sensors 50 to 58, and the like provided in the vehicle 40.

Furthermore, the base station in the present disclosure may be interpreted as a user terminal. For example, each aspect/embodiment of the present disclosure may be applied to the structure that replaces a communication between a base station and a user terminal with a communication between a plurality of user terminals (for example, which may be referred to as "Device-to-Device (D2D)", "Vehicle-to-Everything (V2X)", and the like). In this case, user terminals 20 may have the functions of the base stations 10 described above. The words such as "uplink" and "downlink" may be interpreted as the words corresponding to the terminal-to-terminal communication (for example, "sidelink"). For example, an uplink channel, a downlink channel and so on may be interpreted as a sidelink channel.

Likewise, the user terminal in the present disclosure may be interpreted as a base station. In this case, the base station 10 may have the functions of the user terminal 20 described above.

Operations which have been described in the present disclosure to be performed by a base station may, in some cases, be performed by an upper node of the base station. In a network including one or a plurality of network nodes with base stations, it is clear that various operations that are performed to communicate with terminals can be performed by base stations, one or more network nodes (for example, Mobility Management Entities (MMEs), Serving-Gateways (S-GWs), and so on may be possible, but these are not limiting) other than base stations, or combinations of these.

Each aspect/embodiment described in the present disclosure may be used independently, may be used in combination, or may be switched depending on the mode of implementation. The order of processes, sequences, flowcharts, and so on that have been used to describe the aspects/embodiments in the present disclosure may be re-ordered as long as inconsistencies do not arise. For example, although various methods have been illustrated in the present disclosure with various components of steps in exemplary orders, the specific orders that are illustrated herein are by no means limiting.

The aspects/embodiments illustrated in the present disclosure may be applied to Long Term Evolution (LTE), LTE-Advanced (LTE-A), LTE-Beyond (LTE-B), SUPER 3G, IMT-Advanced, 4th generation mobile communication system (4G), 5th generation mobile communication system (5G), 6th generation mobile communication system (6G), xth generation mobile communication system (xG (where x is, for example, an integer or a decimal)), Future Radio Access (FRA), New-Radio Access Technology (RAT), New Radio (NR), New radio access (NX), Future generation radio access (FX), Global System for Mobile communications (GSM (registered trademark)), CDMA 2000, Ultra Mobile Broadband (UMB), IEEE 802.11 (Wi-Fi (registered trademark)), IEEE 802.16 (WiMAX (registered trademark)), IEEE 802.20, Ultra-WideBand (UWB), Bluetooth (registered trademark), systems that use other adequate radio communication methods and next-generation systems that are enhanced, modified, created, or defined based on these. A plurality of systems may be combined (for example, a combination of LTE or LTE-A and 5G, and the like) for application.

The phrase "based on" (or "on the basis of") as used in the present disclosure does not mean "based only on" (or "only on the basis of"), unless otherwise specified. In other words, the phrase "based on" (or "on the basis of") means both "based only on" and "based at least on" ("only on the basis of" and "at least on the basis of").

Reference to elements with designations such as "first", "second", and so on as used in the present disclosure does not generally limit the quantity or order of these elements. These designations may be used in the present disclosure only for convenience, as a method for distinguishing between two or more elements. Thus, reference to the first and second elements does not imply that only two elements may be employed, or that the first element must precede the second element in some way.

The term "deciding (determining)" as in the present disclosure herein may encompass a wide variety of actions. For example, "deciding (determining)" may be interpreted to mean making "decisions(determinations)" about judging, calculating, computing, processing, deriving, investigating, looking up, search and inquiry (for example, searching a table, a database, or some other data structures), ascertaining, and so on.

Furthermore, "deciding (determining)" may be interpreted to mean making "decisions(determinations)" about receiving (for example, receiving information), transmitting (for example, transmitting information), input, output, accessing (for example, accessing data in a memory), and so on.

In addition, "deciding (determining)" as used herein may be interpreted to mean making "decisions(determinations)" about resolving, selecting, choosing, establishing, comparing, and so on. In other words, "deciding (determining)" may be interpreted to mean making "decisions (determinations)" about some action.

"Decide/deciding (determine/determining)" may be used interchangeably with "assume/assuming", "expect/expecting", "consider/considering", and the like.

"The maximum transmit power" described in the present disclosure may mean a maximum value of the transmit power, may mean the nominal maximum transmit power (the nominal UE maximum transmit power), or may mean the rated maximum transmit power (the rated UE maximum transmit power).

## EP 4 788 041 A1

The terms "connected", "coupled", or any variation of these terms as used in the present disclosure mean any direct or indirect connections or coupling between two or more elements, and may include the presence of one or more intermediate elements between two elements that are "connected" or "coupled" to each other. The coupling or connection between the elements may be physical, logical, or a combination thereof. For example, "connection" may be interpreted as "access".

In the present disclosure, when two elements are connected, the two elements may be considered "connected" or "coupled" to each other by using one or more electrical wires, cables and printed electrical connections, and, as some non-limiting and non-inclusive examples, by using electromagnetic energy having wavelengths in radio frequency regions, microwave regions, (both visible and invisible) optical regions, or the like.

In the present disclosure, the phrase "A and B are different" may mean that "A and B are different from each other". It should be noted that the phrase may mean that "A and B are each different from C". The terms "separate", "coupled", and so on may be interpreted similarly to "different".

In the case where the terms "include", "including", and variations thereof are used in the present disclosure, these terms are intended to be comprehensive, in a manner similar to the term "comprising". Furthermore, the term "or" used in the present disclosure is not intended to be an "exclusive or".

For example, in the present disclosure, where an article such as "a", "an", and "the" is added by translation, the present disclosure may include that a noun after the article is in a plural form.

In the present disclosure, "equal to or less than", "less than", "equal to or more than", "more than", "equal to", and the like may be used interchangeably. In the present disclosure, words such as "good", "bad", "large", "small", "high", "low", "early", "late", "wide", "narrow", and the like may be used interchangeably irrespective of positive degree, comparative degree, and superlative degree. In the present disclosure, expressions obtained by adding "i-th" (i is any integer) to words such as "good", "bad", "large", "small", "high", "low", "early", "late", "wide", "narrow", and the like may be used interchangeably irrespective of positive degree, comparative degree, and superlative degree (for example, "best" may be used interchangeably with "i-th best", and vice versa).

In the present disclosure, "of", "for", "regarding", "related to", "associated with", and the like may be used interchangeably.

Now, although the invention according to the present disclosure has been described in detail above, it is apparent to a person skilled in the art that the invention according to the present disclosure is by no means limited to the embodiments described in the present disclosure. Modifications, alternatives, replacements, etc., of the invention according to the present disclosure may be possible without departing from the subject matter and the scope of the present invention defined based on the descriptions of claims. The description of the present disclosure is provided only for the purpose of explaining examples, and should by no means be construed to limit the invention according to the present disclosure in any way.

## Claims

1. A terminal comprising:

   a transmitting section that performs random access channel (PRACH) transmission triggered by a downlink control channel (PDCCH) order; and
   a control section that controls timing of the PRACH transmission by taking account of at least one of a first parameter for synchronization signal block (SSB)-based time and frequency tracking or a second parameter for radio frequency (RF) and base band (BB) preparation, for a time gap between PDCCH order reception and the PRACH transmission.

2. The terminal according to claim 1, wherein
   the control section judges application of the first parameter, based on an SSB index indicated by the PDCCH order.

3. The terminal according to claim 1, wherein
   the second parameter is determined based on whether a PRACH bandwidth is included in an active uplink bandwidth part (UL BWP).

4. The terminal according to claim 1, wherein
   the control section applies a transmission configuration indication (TCI) state switching delay requirement to the first parameter.

5. A radio communication method for a terminal, the radio communication method comprising:

performing random access channel (PRACH) transmission triggered by a downlink control channel (PDCCH) order; and

controlling timing of the PRACH transmission by taking account of at least one of a first parameter for synchronization signal block (SSB)-based time and frequency tracking and a second parameter for radio frequency (RF) and base band (BB) preparation, for a time gap between PDCCH order reception and the PRACH transmission.

6. A base station comprising:

a transmitting section that transmits a downlink control channel (PDCCH) order for triggering random access channel (PRACH) transmission; and

a control section that controls reception of the PRACH transmission taking account of at least one of a first parameter for synchronization signal block (SSB)-based time and frequency tracking and a second parameter for radio frequency (RF) and base band (BB) preparation, for a time gap between PDCCH order reception and the PRACH transmission.

EP 4 788 041 A1

## FIG.1A
### SINGLE MODE

TRP2

TRP1

control

data

UE

## FIG.1B
### SINGLE-MASTER MODE

TRP2

data

TRP1

control

data

UE

## FIG.1C
### MASTER-SLAVE MODE

TRP2

data

control part 2

control part 1

data

TRP1

UE

## FIG.1D
### MULTI-MASTER MODE

TRP2

data

control

control

TRP1

data

UE

FIG.2A

PCI#1　　　DYNAMIC
PORT/TRP SELECTION　　　PCI#3

SERVING CELL　　　NON-SERVING CELL

FIG.2B

PCI#1　　　PCI#3

PCI#2

SAME SERVING CELL CONFIGURATION

EP 4 788 041 A1

FIG.3A

PCI#1

PCI#3

System
Information

UE dedicated CH

SERVING CELL

ADDITIONAL CELL

SERVING CELL SWITCHING BY L1/L2
NOT SUPPORTED

FIG.3B

PCI#1

PCI#3

System
Information

UE dedicated CH

PREVIOUS SERVING CELL

NEW SERVING CELL

SERVING CELL SWITCHING BY L1/L2
SUPPORTED

MAC ENTITY/MCG/SCG

SpCell#0
SCell#1
SCell#2

CONFIGURATION EXAMPLE 1

SpCell#0 — #0-1 #0-2 #0-3
SCell#1 — #1-1
SCell#2 — #2-1 #2-2

CONFIGURATION EXAMPLE 2

SpCell#0 #3 #6 #8
SCell#1 #4
SCell#2 #5 #7

CONFIGURATION EXAMPLE 3
Candidate Cell Group #1 #2 #3

SpCell#0 #0 #0 #0
SCell#1 #1 #1
SCell#2 #2 #1

FIG.4

FIG.5A

F

CONFIGURATION EXAMPLE 1

SpCell#0 #0-1 #0-2 #0-3

SCell#1 #1-1

SCell#2 #2-1 #2-2

FIG.5B

F

CONFIGURATION EXAMPLE 2

SpCell#0 #3 #6 #8

SCell#1 #4

SCell#2 #5 #7

CONFIGURATION EXAMPLE 3

FIG.5C

F

Candidate Cell Group #1 #2 #3

SpCell#0 #0 #0 #0

SCell#1 #1

SCell#2 #2 #1

EP 4 788 041 A1

FIG.6

Timing Advance Command MAC CE

| TAG ID | Timing Advance Command | Oct 1 |

FIG.7

# 8.1   Random access preamble

[...]

If a random access procedure is initiated by a PDCCH order, the UE, if requested by higher layers, transmits a PRACH in the selected PRACH occasion, as described in [11, TS 38.321], for which a time between the last symbol of the PDCCH order reception and the first symbol of the PRACH transmission is larger than or equal to $N_{T,2} + \Delta_{\text{BWPSwitching}} + \Delta_{\text{Delay}} + T_{\text{switch}} + T_{\text{SSB}} + \Delta_{\text{RF/BB\_preparation}}$ msec, where

-   $N_{T,2}$ is a time duration of $N_2$ symbols corresponding to a PUSCH preparation time for UE processing capability 1 [6, TS 38.214] assuming $\mu$ corresponds to the smallest SCS configuration between the SCS configuration of the PDCCH order and the SCS configuration of the corresponding PRACH transmission

-   $\Delta_{\text{BWPSwitching}} = 0$ if the active UL BWP does not change or if cell indicator field in PDCCH order indicates a non-serving cell, and $\Delta_{\text{BWPSwitching}}$ is defined in [10, TS 38.133] otherwise

-   $\Delta_{\text{Delay}} = 0.5$ msec for FR1 and $\Delta_{\text{Delay}} = 0.25$ msec for FR2

-   $T_{\text{switch}}$ is a switching gap duration as defined in [6, TS 38.214]

- $T_{\text{SSB}}$ is for SSB based time and frequency tracking, if cell indicator field in PDCCH order indicates a non-serving cell.

    - $T_{\text{SSB}} = 0$, if TCI state of indicated non-serving cell has been activated before PDCCH ordered RACH, and if SSB index indicated in PDCCH order is in the active TCI state list, and measurement period of L1-RSRP is no longer than 160ms.
    - $T_{\text{SSB}} = X$ (FFS, X=0 is also possible), if SSB index indicated in PDCCH order is not in the active TCI state list that has been activated for the indicated non-serving cell, when the measurement period of L1-RSRP is no longer than 160ms.
    - $T_{\text{SSB}} = Y$ (FFS, non-zero. May refer to TS38.133), otherwise.

-   $\Delta_{\text{RF/BB\_preparation}}$ is for RF and/or BB preparation and retuning, if cell indicator field in PDCCH order indicates a non-serving cell.

    - $\Delta_{\text{RF/BB\_preparation}} = A$ (FFS, A=0 is also possible), if PRACH bandwidth of indicated non-serving cell is within active UL BWP.
    - $\Delta_{\text{RF/BB\_preparation}}$ is DCI based BWP switching delay specified in clause 8.6 of TS 38.133 (in TS 38.133, DCI based BWP switch delay value is dependent on UE capability), if PRACH bandwidth of indicated non-serving cell is outside active UL BWP but within one of configured UL BWPs of any active serving cell.
    - $\Delta_{\text{RF/BB\_preparation}} = B$ (FFS, non-zero. May refer to TS38.133), if PRACH bandwidth of indicated non-serving cell is not within any of the configured UL BWPs of any active serving cell.

For a PRACH transmission using 1.25 kHz or 5 kHz SCS, the UE determines $N_2$ assuming SCS configuration $\mu = 0$.

## FIG.8

FIG.9

FIG.10

EP 4 788 041 A1

FIG.11

BASE STATION 10, USER TERINAL 20

1001

PROCESSOR

1007

1004

COMMUNICATION
APPARATUS

1002

MEMORY

1005

INPUT
APPARATUS

1003

STORAGE

1006

OUTPUT
APPARATUS

FIG.12

FIG.13

## INTERNATIONAL SEARCH REPORT

| International application No. |
|---|
| **PCT/JP2023/035796** |

### A. CLASSIFICATION OF SUBJECT MATTER

*H04W 74/0833*(2024.01)i; *H04W 72/232*(2023.01)i
FI: H04W74/0833; H04W72/232

According to International Patent Classification (IPC) or to both national classification and IPC

### B. FIELDS SEARCHED

Minimum documentation searched (classification system followed by classification symbols)

H04B7/24-7/26; H04W4/00-99/00

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
|---|---|---|
| X | HUAWEI. HISILICON. Discussion on SFN and PDCCH-order based RACH for L1/L2-based inter-cell mobility [online]. 3GPP TSG RAN WG4 #108bis R4-2315654. Internet <URL: https://www.3gpp.org/ftp/tsg_ran/WG4_Radio/TSGR4_108bis/Docs/R4-2315654.zip>. 27 September 2023 <br> p. 3 | 1-3, 5, 6 |
| Y | | 4 |
| Y | NOKIA. NOKIA SHANGHAI BELL. Discussion on LTM cell switch delay requirements [online]. 3GPP TSG RAN WG4 #108bis R4-2315929. Internet <URL:https://www.3gpp.org/ftp/tsg_ran/WG4_Radio/TSGR4_108bis/Docs/R4-2315929.zip>. 27 September 2023 <br> section 2 | 4 |
| A | VIVO. draftCR on RRM requirements for TCI activation before cell switch in R18 LTM [online]. 3GPP TSG RAN WG4 #108bis R4-2316291. Internet <URL:https://www.3gpp.org/ftp/tsg_ran/WG4_Radio/TSGR4_108bis/Docs/R4-2316291.zip>. 27 September 2023 <br> section 8.15.6 | 4 |

☐ Further documents are listed in the continuation of Box C.    ☐ See patent family annex.

| | |
|---|---|
| \* Special categories of cited documents: <br> "A" document defining the general state of the art which is not considered to be of particular relevance <br> "D" document cited by the applicant in the international application <br> "E" earlier application or patent but published on or after the international filing date <br> "L" document which may throw doubts on priority claim(s) or which is cited to establish the publication date of another citation or other special reason (as specified) <br> "O" document referring to an oral disclosure, use, exhibition or other means <br> "P" document published prior to the international filing date but later than the priority date claimed | "T" later document published after the international filing date or priority date and not in conflict with the application but cited to understand the principle or theory underlying the invention <br> "X" document of particular relevance; the claimed invention cannot be considered novel or cannot be considered to involve an inventive step when the document is taken alone <br> "Y" document of particular relevance; the claimed invention cannot be considered to involve an inventive step when the document is combined with one or more other such documents, such combination being obvious to a person skilled in the art <br> "&" document member of the same patent family |

| Date of the actual completion of the international search | Date of mailing of the international search report |
|---|---|
| **25 March 2024** | **02 April 2024** |

| Name and mailing address of the ISA/JP | Authorized officer |
|---|---|
| **Japan Patent Office (ISA/JP)** <br> **3-4-3 Kasumigaseki, Chiyoda-ku, Tokyo 100-8915** <br> **Japan** | |
| | Telephone No. |

Form PCT/ISA/210 (second sheet) (July 2022)